Europäisches Patentamt

European Patent Office

Office européen des brevets

(19)

(11) Publication number: **0 051 400**
**B1**

(12) **EUROPEAN PATENT SPECIFICATION**

(45) Date of publication of patent specification: **12.03.86**

(51) Int. Cl.⁴: **C 08 F 8/00, C 09 D 3/00**

(21) Application number: **81304964.0**

(22) Date of filing: **22.10.81**

(54) Polymeric stabilizer, stable dispersions prepared therefrom and paint compositions comprising such dispersions.

(30) Priority: 23.10.80 US 199394
23.10.80 US 199395
23.10.80 US 199396
23.10.80 US 199761
23.10.80 US 199776
23.10.80 US 199794
23.10.80 US 199805
23.10.80 US 199874
23.10.80 US 199899

(43) Date of publication of application:
12.05.82 Bulletin 82/19

(45) Publication of the grant of the patent:
12.03.86 Bulletin 86/11

(84) Designated Contracting States:
DE FR GB

(56) References cited:
BE-A- 703 258
DE-A-2 452 074
FR-A-2 193 036

(73) Proprietor: FORD MOTOR COMPANY. LIMITED
Eagle Way
Brentwood Essex CM13 3BW (GB)
(84) GB

(73) Proprietor: FORD-WERKE
AKTIENGESELLSCHAFT
Ottoplatz 2 Postfach 21 03 69
D-5000 Köln 21 (DE)
(84) DE

(73) Proprietor: FORD FRANCE SOCIETE ANONYME
344 Avenue Napoléon Bonaparte B.P. 307
F-92506 Rueil Malmaison Cedex (FR)
(84) FR

(72) Inventor: Peng, Stephen Chung-Suen
3333 Sandy Creek Drive
Utica Michigan 48087 (US)
Inventor: Horvath, Stanley K
52250 Belle Arbor
Rochester Michigan 48063 (US)
Inventor: Nordstrom, John David
19225 Gainsborough
Detroit Michigan 48223 (US)

(74) Representative: Drakeford, Robert William et al
Ford Motor Company Limited 15/448, Research
& Engineering Centre Laindon
Basildon Essex SS15 6EE (GB)

Courier Press, Leamington Spa, England.

## Description

This invention relates to copolymers adapted for use as polymeric stabilizers in stable dispersions, and dispersions made therewith, and coating compositions incorporating such dispersions.

Because of increasingly strict solvent emission regulations in recent years, low solvent emission paints have become desirable. A number of intermediate and high solids paint compositions have been proposed to meet these low solvent emission requirements. However, many of these compositions are deficient because of difficulty in application, poor flow out, lack of smoothness and evenness and poor distribution of pigment, particularly metallic flake pigments, the dificiency in compositions including metallic flake results from undesired reorientation of the metallic flake during application and curing of the coating. Flake reorientation results primarily because of the very low viscosity resins used in paint compositions to accommodate intermediate and high solids. The viscosity of these resins is not sufficient to immobilize the flakes which tend to redistribute themselves to show "reverse flop" and non-uniform distribution.

Stable dispersions of the type to which the invention relates, or nonaqueous dispersions as they are typically called, have been developed in recent years in attempts to improve the efficiency of applying protective or decorative coatings to a variety of objects and have been particularly widely used in the coating of motor vehicle bodies and vehicle components. Those skilled in the art will be aware of numerous prior art references relating to nonaqueous dispersion technology. Among the more pertinent prior art references, insofar as this invention is concerned, are those which have taught various improved stabilizers and methods of making the same. These include: U.S. Patents 3,317,635 to Osmond et al, 3,514,500 to Osmond et al, 3,607,821 to Clarke, 3,814,720 to Maker et al, 3,814,721 to Maker et al and 4,147,688 to Makhlouf et al.

U.S. Patent 3,317,635 to Osmond et al teaches stabilized dispersions or nonaqueous dispersions stabilized by block or graft copolymers of ethylenically unsaturated monomers with a precursor containing a polymeric chain and an unsaturated group with which the monomer polymerizes in vinyl-type manner to produce a polymeric vinyl chain of a different degree of polarity from the original polymeric chain (Col. 2, lines 1—9). Stable dispersions of synthetic monomers in organic liquids may be made in accordance with Osmond et al by precipitating the polymeric in the organic liquid in the presence of the stabilizer such that one polymeric chain is solvated by the organic liquid and another is non-solvated and consequently becomes associated with the non-solvated polymer (Col. 2, lines 50—56).

U.S. Patent 3,514,500 to Osmond et al teaches a stabilizer for nonaqueous dispersions, which stabilizer comprises a polymeric backbone and attached thereto at least five side chains of different polarity than the backbone (see abstract). The side chains are attached to the backbone by a condensation reaction between side chains containing only one reactive group per molecule and a backbone containing at least five complementary reactive groups per molecule (Co. 1, line 71—Col. 2, line 1).

U.S. Patent 3,607,821 to Clarke teaches a stabilizer for nonaqueous dispersions wherein the stabilizer is chemically reacted with dispersed particles of the dispersion (Col. 1, lines 36—42). Each co-reacted stabilizer molecule forms from 1 to 10 (preferably 1 to 4) covalent links with the dispersed polymer (Col. 1, lines 50—52). The covalent links between the stabilizer and the dispersed polymer are formed by reaction between chemical groups provided by the stabilizer and complementary chemical groups provided by the dispersed polymer or by copolymerization reaction (Col. 1, lines 63—67).

U.S. Patent 3,814,720 to Maker et al and assigned to Ford Motor Company, the assignee of this application, teaches nonaqueous dispersions which employ a methylolated addition copolymer of an ethenic monomer and an amide of an unsaturated acid (see abstract and claims).

U.S. Patent 3,814,721, also to Maker et al and also assigned to Ford Motor Company, teaches nonaqueous dispersions which are prepared employing a precursor addition copolymer which is prepared by reacting an active ethenic monomer having a functional epoxy, hydroxy, cyanato, or carboxy group with another active ethenic monomer free of functional groups in an aromatic or alcoholic solvent, followed by addition of an aliphatic liquid in which the polymer is insoluble, followed still further by the addition of a third ethenic monomer having one of such functional groups and a fourth ethenic monomer free of such functional groups, such that the aliphatic liquid is a non-solvent for the second addition copolymer which is dispersed throughout the medium (see abstract, examples and claims).

Stable crosslinked dispersions containing microgel particles are well known in the art. U.S. Patent 4,147,688 to Makhlouf et al teaches such crosslinked dispersions wherein crosslinked acrylic polymer microgel particles are formed by free radical addition polymerization of alpha, beta ethylenically unsaturated monocarboxylic acid, at least one other copolymerizable monoethylenically unsaturated monomer and a certain percentage of crosslinking monomer, in the presence of a hydrocarbon dispersing liquid (see abstract, examples and claims). Other crosslinked dispersions containing microgel particles are disclosed in the patent applications and patents referred to in the Makhlouf et al disclosure.

Coating compositions of the type disclosed and claimed in this application, except for the addition of the stable crosslinked dispersion flow control additive, were developed by coworkers of the inventor of the subject invention prior to the invention described and claimed herein. Those compositions were prepared both with and without flow control additives. However, the preferable compositions were those prepared using a flow control additive which was made generally in accordance with the teaching of U.S. Patent 4,147,688 to Makhlouf et al.

2

U.S. Patent 4,025,474 to Porter et al disclose a polyester based coating composition which includes the crosslinked dispersions disclosed by Mahklouf et al. U.S. Patent 4,074,141 to Porter et al discloses carboxylic acid amide interpolymer-based coating compositions including the same crosslinked dispersions. U.S. Patent 4,115,472, also to Porter et al, discloses urethane coating compositions also including the crosslinked dispersions of Mahklouf et al. U.S. Patent 4,055,607 to Sullivan et al discloses thermosetting compositions of (a) solution acrylic polymer, (b) at least 0.5% of microgel particles formed by polymerizing hydroxyl bearing monomers with nonhydroxyl bearing monomers in the presence of said stabilizer disclosed by Mahklouf et al, and (c) melamine resin. The microgel dispersion of Sullivan et al thus contains functionality capable of reacting with the melamine crosslinking agent.

According to the present invention, there is provided a dispersion comprising an organic liquid, dispersed particles of an addition polymer which are insoluble in the organic liquid, and a polymeric dispersion stabilizer comprising a copolymer comprising the reaction product of ethylenically unsaturated monomers (A) and copolymer reactant (B), said ethylenically unsaturated monomers (A) bearing functionality capable of condensation reaction with complementary functionality of said copolymer reactant (B) which comprises a random copolymer of

(i) from 20 to 45 weight percent of ethylenically unsaturated monomers, homopolymers of which would be substantially insoluble in the said organic liquid;

(ii) from 40 to 75 weight percent of ethylenically unsaturated monomers, homopolymers of which would be substantially soluble in said organic liquid; and

(iii) from 2 to 15 weight percent of ethylenically unsaturated monomers bearing said complementary functionality capable of condensation reaction with said ethylenically unsaturated monomers (A), said ethylenically unsaturated monomers (A) being reacted with said copolymer reactant (B) in an amount sufficient to react with at least about 10 percent of said complementary functionality of said copolymer reactant (B).

The invention also provides a coating composition comprising

(I) an hydroxy-functional film-forming component,

(II) a cross linking agent bearing functionality capable of reacting with the hydroxy groups of the film-forming component, and

(III) a flow control additive comprising a dispersion in accordance with the invention.

More specifically, the preferred copolymers of the invention are useful as stabilizers in a stable dispersion in organic liquids. The copolymers bear pendent ethylenic unsaturation and comprise the reaction product of ethylenically unsaturated monomers (A) and copolymer reactant (B). The ethylenically unsaturated monomers (A) bear functionality capable of condensation reaction with complementary functionality of copolymer reactant (B). Copolymer reactant (B) comprises a random copolymer of ethylenically unsaturated monomers, homopolymers of which would be substantially insoluble in a selected organic liquid, ethylenically unsaturated monomers homopolymers of which would be substantially soluble in the same organic liquid, and ethylenically unsaturated monomers bearing complementary functionality capable of condensation reaction with ethylenically unsaturated monomers (A). Ethylenically unsaturated monomers (A) are reacted with copolymer reactant (B) in an amount sufficient to react at least about 10 percent of the complementary functionality of the copolymer.

The stable crosslinked dispersions containing microgel particles as prepared in accordance with this invention are formed in the manner described in U.S. Patent 4,147,688 to Makhlouf et al, by addition polymerization of (a) first and second ethylenically unsaturated monomers each bearing functionality capable of crosslinking reaction with the other and (b) at least one other monoethylenically unsaturated monomer, in the presence of (I) organic liquid which is a solvent for the polymerizable monomers, but a non-solvent for the resultant polymer, and (II) the polymeric dispersion stabilizer briefly described above. In accordance with the invention, the crosslinked dispersion is prepared by carrying out the addition polymerization at an elevated temperature such that the dispersion polymer is first formed and then crosslinked.

This invention also relates to coating compositions of the type comprising hydroxy functional film formers and a crosslinking agent bearing functionality capable of reacting with the hydroxyl groups of the film former. The improvement of the compositions of the invention comprises including in the composition a flow control additive which comprises the aforementioned stable, crosslinked dispersion containing microgel particles. The additive is included in an amount ranging from about 0.5 to about 30, preferably about 3 to about 15, parts of resin solids in the flow control additive per 100 parts of total resin solids in the composition.

Further improvement of the invention comprises including in the crosslinked dispersion whether employed alone or as a flow control additive in a coating composition as described above, a further stabilizer, which, except for solvents, consists essentially of a butylated melamine formaldehyde resin having a number of average molecular weight ($\overline{M}_n$) in the range from about 700 to about 2,500. This further stabilizer is included in the crosslinked dispersion in an amount ranging from about 25 to about 75 parts of resin solids per 100 parts total resin solids in a crosslinked dispersion.

The preferred improved intermediate solids coating compositions of the invention comprise: (I) a film forming component comprising hydroxy functional copolymer; (II) butylated melamine formaldehyde crosslinking agent; and (III) the above flow control additive with or without further stabilization.

3

The film forming component comprises hydroxy functional copolymer having a number average molecular weight ($M_n$) of greater than about 5,000 and a glass transition temperature of between about −25°C and about 70°C the hydroxy functional copolymer being formed from about 5 to about 50 weight percent of hydroxy functional monoethylenically unsaturated monomers and a remainder of other monoethylenically unsaturated monomers.

The butylated melamine formaldehyde crosslinking agent has a number average molecular weight of between about 700 and about 2,500 and is included in the composition in an amount ranging from about 20 to about 100 parts per 100 parts of the film forming component.

The flow control additive is included in an amount ranging from about 0.5 to about 30, preferably from about 3 to about 15 parts of resin solids in the flow control additive per 100 parts of total resin solids in the composition.

The improved high solids coating compositions of the invention comprise: (I) a film forming component consisting essentially of a polymeric component having a molecular weight of less than about 5,000; (II) a crosslinking agent comprising monomeric methylated melamine resin: and (III) the above flow control additive with or without further stabilization.

The film forming component consists essentially of a polymeric component having a number average molecular weight of less than about 5,000, said polymeric component comprising at least about 50 percent by weight of hydroxy functional copolymer having a number average molecular weight of between about 1,500 and about 5,000 and a glass transition temperature of between about −25°C and about 70°C. This hydroxy functional copolymer is formed from about 15 to about 35 weight percent of hydroxy functional monoethylenically unsaturated monomers, between about 2 and about 5 weight percent of alpha, beta olefinically unsaturated carboxylic acids and a remainder of other monoethylenically unsaturated monomers.

The crosslinking agent of the compositions of the invention comprises monomeric methylated melamine resin having a number average molecular weight of between about 350 and about 1,000 and is included in the composition in an amount ranging from about 20 to about 100 parts per 100 parts of the film forming component.

The flow control additive is included in an amount ranging from about 0.5 to about 30, preferably from about 3 to about 15, parts of resin solids in the flow control additive per 100 parts of total resin solids in the composition.

Preferred embodiments of the invention will now be described, by way of example only.

Polymeric dispersion stabilizer

The stabilizer of this invention is a copolymer prepared by reacting ethylenically unsaturated monomers (A) and random copolymer reactant (B) through complementary functionality present on the monomers (A) and the random copolymer reactant (B).

Copolymer reactant (B) comprises a random copolymer of (i) between about 20 and about 45, preferably between about 25 and about 40, weight percent of ethylenically unsaturated monomers, homopolymers of which would be substantially insoluble in a selected organic liquid, (ii) between about 40 and about 75, preferably between about 50 and about 65, weight percent of ethylenically unsaturated monomers, homopolymers of which would be substantially soluble in the same organic liquid, and (iii) between about 2 and about 15, preferably between about 5 and about 10, weight percent of ethylenically unsaturated monomers bearing complementary functionality capable of condensation reaction with ethylenically unsaturated monomers (A). The ethylenically unsaturated monomers (A) are reacted with copolymer reactant (B) in an amount sufficient to react at least about 10 percent of complementary functionality of the copolymer.

As used herein, "ethylenically unsaturated monomer" means any monomer which bears ethylenic unsaturation, including doubly unsaturated monomers (e.g., butadiene), and which is capable of polymerizing in a vinyl-type manner.

Condensation reactions between ethylenically unsaturated monomers (A) and complementary functionality of random copolymer reactant (B), as provided by ethylenically unsaturated monomers (iii) used to prepare that copolymer reactant, may be selected from the numerous condensation reactions known to those skilled in the art. Common condensation reaction links are: ester links, especially those formed by ester interchange or reaction such as carboxyl/glycidyl, hydroxyl/acid anhydride or hydroxyl/acid chloride; ether links, especially when formed by addition reactions between alkylene oxides and hydroxyl groups; urethane links, especially those formed by reaction between isocyanate and hydroxyl; and amide links, especially when formed by amine/acid chloride reactions. By way of example, among the numerous condensation reaction complementary groups are: acid anhydride/hydroxyl; acid anhydride/amine; acid anhydride/mercaptan; epoxide/acid; epoxide/amine; isocyanate/hydroxyl; hemiformal/amide; carbonate/amine; cycloimide/amine; and cycloimide/hydroxyl. Among the numerous monomers which may provide reactive groups either in the case of ethylenically unsaturated monomers (A) or the ethylenically unsaturated monomers (iii) used to prepare the random copolymer reactant are: maleic anhydride; maleic acid; itaconic acid; acid esters of maleic and itaconic acids; glycidyl methacrylate; glycidyl acrylate; hydroxy alkyl methacrylates; acrylamide; methacrylamide; dimethyl aminoethyl methacrylate; vinylidene carbonate, N-carbamyl maleimide, vinylisocyanate.

The first (i) and second (ii) types of ethylenically unsaturated monomers used in preparation of copolymer reactant (B), as noted above, are characterized by the fact that if they were formed as homopolymers they would respectively be substantially insoluble and soluble in a selected organic liquid. It should be appreciated that the organic solvent selected is used herein merely as a guideline for identifying the relative solubility properties of the first two types of monomer components (i) and (ii) of the random copolymer and that it is not necessary that the stabilizer composition be in an organic liquid in order to exist. While it is not essential for the stabilizer to be maintained in an organic liquid, generally speaking the selected organic liquid which is used as a guide for determining the relative solubility properties of monomers (i) and (ii) of the random copolymer reactant used in preparation of the stabilizer will be the same organic liquid in which the stable dispersion is prepared using the stabilizer of the invention. The stable dispersions prepared using the stabilizer will be discussed further hereinafter.

By "substantially soluble" or "substantially insoluble" in a selected organic liquid it is meant that the homopolymers in question would be either soluble or insoluble to the extent of about 90% in said selected organic liquid.

It will be appreciated that since the selected organic liquid used in determining the solubility and insolubility of the first two types of monomers used in the random copolymer is generally the same as the organic liquid in which the stable dispersion is to be formed, the question of relative solubility and insolubility in the particular organic liquid will be determined by the same factors as are used as guidelines when determining which monomers and solvents are to be employed in the preparation of the stable nonaqueous dispersions. To this end, it will be appreciated that there are essentially three types of systems or reasons why a given polymer, or in the case of the determination of monomers for the random copolymer, homopolymers, are either soluble or insoluble in a given organic liquid. First, the homopolymer may be soluble or insoluble because it is polar relative to the organic liquid. Secondly, it may be soluble or insoluble because it is non-polar relative to the organic liquid. Thirdly, it may be soluble or insoluble in all common organic liquids because of its molecular structure and irrespective of relative polarity. Thus, in selecting a monomer which is characterized in that homopolymers thereof would be substantially insoluble in a selected organic liquid, it is necessary to consider the type of organic liquid which is to be employed in making the determination of solubility or insolubility and to select a monomer which when homopolymerized will exhibit the desired insolubility. With respect to the second type of ethylenically unsaturated monomer, i.e., one which is characterized in that homopolymers thereof would be substantially soluble in the organic liquid, it is necessary to select the monomer which when homopolymerized will be soluble in that given organic liquid. The types of monomers, homopolymers of which will be soluble in given types of organic liquids should be apparent to those skilled in the art of nonaqueous dispersions. For a thorough discussion of relative solubilities and insolubilities attention is directed to the above-discussed prior art patents.

Generally speaking, when the organic liquid is of a non-polar nature, such as an aliphatic hydrocarbon, suitable monomers, homopolymers of which would be insoluble or substantially insoluble therein, include acrylic monomers selected from (a) esters of $C_1$—$C_3$ aliphatic alcohols and acrylic, methacrylic or ethacrylic acids, (b) acrylic and methacrylic acids, and (c) ethylene and propylene glycol monoesters of acrylic, methacrylic or ethacrylic acids. These are essentially polar monomers or monomers which form polar homopolymers and which would be substantially insoluble in a non-polar solvent such as aliphatic hydrocarbon. Especially preferred for use as this first type of monomer which would be insoluble in an aliphatic hydrocarbon or other non-polar solvent is the polar monomer methylmethacrylate. Exemplary of suitable monomers for use as the second type of monomer characterized by homopolymers thereof being substantially soluble in a non-polar solvent such as an aliphatic hydrocarbon would be esters of $C_4$—$C_{18}$ aliphatic alcohols and acrylic, methacrylic or ethacrylic acids. It will be appreciated that monomers characterized in that they would form homopolymers which are highly polar, could be used in more polar organic liquids such as aromatic hydrocarbons, fatty esters and fatty ketones and still be substantially insoluble therein. Those skilled in the art will appreciate the numerous selections which could be made.

If the selected organic liquid is one which is polar rather than non-polar, then the particular ethylenically unsaturated monomers selected for the first two types (i) and (ii) used in the preparation of random copolymer reactant (B) will differ. Among the numerous polar solvents which will come to the mind of those skilled in the art are various alcohols such as methanol and ethanol, glycols, esters, ethers, polyols and ketones. When using such a polar organic liquid the first type of monomer (i) (that which is characterized by being substantially insoluble in the selected organic liquid) may be selected from hydrocarbons such as styrene, vinyltoluene, divinylbenzene, isoprene, butadiene, isobutyrene and ethylene. Also, of course the higher fatty esters of unsaturated acids such as acrylic, methacrylic and ethacrylic acids wherein the alcohol component of the ester contains a long carbon to carbon chain. Preferably these are esters of $C_4$—$C_{18}$ aliphatic alcohols and acrylic, methacrylic or ethacrylic acids. The polar monomers or monomers homopolymers of which would be polar and therefore substantially soluble in such an organic liquid would include numerous monomers including those acrylic monomers selected from (a) esters of $C_1$—$C_3$ aliphatic alcohols and acrylic, methacrylic or ethacrylic acids, (b) acrylic and methacrylic acids and (c) ethylene and propylene glycol monoesters of acrylic, methacrylic or ethacrylic acids.

While, as discussed above, numerous types of ethylenically unsaturated monomers may be employed in the preparation of the stabilizer as any one of the monomers (A) or any of the three types of monomers (i), (ii) or (iii) used in the random copolymerization to form copolymer reactant (B) which reacts with monomers (A), it is preferred that such monomers be acrylic monomers. "Acrylic monomer" as used herein means a monomer based on acrylic, methacrylic or ethacrylic acids. In those cases where complementary functionality is desired for a reaction between monomers (A) and the random copolymer reactant (B), the acid itself may, of course, be employed. Other types of acrylic monomers, which are commonly known to those skilled in the art and which are desirable for use in the preparation of the stabilizer of the invention, are the numerous well known esters of acrylic, methacrylic and ethacrylic acids.

Random copolymer reactant (B), used to prepare the stabilizer of the invention has a number average molecular weight in the range of between about 4,000 and about 15,000, preferably, from about 6,000 to about 10,000. While, ethylenically unsaturated monomers (A) are reacted with the random copolymer reactant (B) in amounts sufficient to react with about 10% of said complementary functionality of the copolymer reactant (B), it is preferred that the reactants be combined in amounts such that monomers (A) react with between about 0.5 and about 3.0 weight percent of the copolymer reactant (B).

Dispersions generally

The types of stable dispersion for which the stabilizers of the present invention are intended are well known and are commonly referred to as nonaqueous dispersions. To produce such dispersions, the addition polymer which is formed in the solvent must be substantially insoluble in that organic liquid and consequently the nature of the polymer to be dispersed determines the nature of the organic liquid. By the same token, the nature of the polymer to be dispersed will determine the nature of the type of stabilizer and which of the various monomer combinations are employed in the preparation of that stabilizer in accordance with the invention. The question of selection of given organic liquids for particular types of polymers to be dispersed revolves around the same principles as discussed above for determination of various solubilities and insolubilites in the solvents. While any of the various combinations of monomers discussed above may be used in the preparation of stabilizers suitable for preparation of dispersions in accordance with the invention, a particularly preferred stabilizer is one which is used in the preparation of dispersions in aliphatic hydrocarbons. In that case, the monomer, the homopolymer of which is substantially insoluble in the aliphatic hydrocarbon, is methylmethacrylate and the monomer, the homopolymer of which is substantially soluble, is 2-ethylhexylacrylate. The monomers bearing complementary functionalities in that particular preferred type of stabilizer are glycidyl acrylate or glycidyl methacrylate on the one hand and acrylic or methacrylic acid on the other.

The process by which stable dispersions are formed using the stabilizers of the present invention is essentially the same as that which is very well known in the art in the preparation of non-aqueous dispersions using other well known stabilizers. In general, it is anticipated or it may be anticipated that the stabilizer of the invention will adequately stabilize the addition polymer being formed if it is employed in amounts ranging from about 2 to about 20, preferably from about 5 to about 10, weight percent based on the total weight of the dispersion being formed and the weight of the stabilizer itself. It should be appreciated, that the ethylenic unsaturation which is present on the stabilizer itself takes part in the addition copolymerization forming the dispersed polymer.

Crosslinked dispersion

The stable crosslinked dispersion of microgel particles is prepared by addition polymerization of (a) between about 1 and about 10 mole percent, preferably between about 2 and about 5 mole percent, each of first and second ethylenically unsaturated monomers, each bearing functionality capable of crosslinking with the other and (b) between about 98 and about 80 mole percent, preferably between about 96 and about 90 mole percent of at least one other monoethylenically unsaturated monomer. The addition polymerization is carried out in the presence of an organic liquid which is a solvent for the polymerizable monomers, but a non-solvent for the resultant polymer and in the presence of the aforementioned polymeric dispersion stabilizer. The polymerization is carried out at elevated temperatures such that the dispersion polymer is first formed and then crosslinked.

The crosslinking functionalities of the first and second ethylenically unsaturated monomers (a) can be selected from a wide variety of functionalities which will be apparent to those skilled in the art. Among the preferred pairs of crosslinking functionalities which may be present on the first and second ethylenically unsaturated monomers are: acid and epoxide; epoxide and amine; acid anhydride and hydroxyl; acid anhydride and amine; acid anhydride and mercaptan; isocyanate and hydroxyl; hemiformal and amide; carbonate and amine; cycloimide and amine; cycloimide and hydroxyl; imine and alkoxysilane; etc.

While the first and second ethylenically unsaturated monomers (a) may be any ethylenically unsaturated monomer within the scope of such term as defined hereinbefore, it is preferred that the monomers be acrylic monomers as defined above.

A preferred class of crosslinked dispersions within the scope of the invention is formed by free radical addition copolymerization, in the presence of the polymeric dispersion stabilizer and in the presence of a hydrocarbon dispersing liquid, of: from about 1 to about 10, preferably from about 2 to about 5, mole percent of alpha, beta ethylenically unsaturated monocarboxylic acid; from about 98 to about 80 weight percent of at least one other copolymerizable monoethylenically unsaturated monomer; and from about 1 to about 10, preferably from about 2 to about 5, weight percent of a crosslinking monomer selected from the group consisting of ethylenically unsaturated monoepoxides. The preferred alpha, beta ethylenically unsaturated monocarboxylic acids for use in this class of crosslinked dispersions are acrylic acid and methacrylic acid, with methacrylic acid being especially preferred.

Various other monoethylenically unsaturated monomers may be copolymerized with the acid monomer in the preparation of this class of crosslinked dispersion. Although essentially any copolymerizable monoethylenically unsaturated monomer may be utilized, depending upon the properties desired, the preferred monoethylenically unsaturated monomers are the alkyl esters of acrylic or methacrylic acid, particularly those having from about 1 to about 4 carbon atoms in the alkyl group. Illustrative of such compounds are the alkyl acrylates, such as methylacrylate, ethylacrylate, propylacrylate and butylacrylate and the alkyl methacrylates, such as methylmethacrylate, ethylmethacrylate, propylmethacrylate and butylmethacrylate. Other ethylenically unsaturated monomers which may be advantageously employed include, for example, the vinyl aromatic hydrocarbons, such as styrene, alpha-methylstyrene, vinyl toluene, unsaturated esters of organic and inorganic acids, such as vinyl acetate, vinyl chloride and the like, and the unsaturated nitriles, such as acrylonitrile, methacrylonitrile, ethacrylonitrile and the like.

Although numerous ethylenically unsaturated monoepoxides will come to the mind of those skilled in the art, representative of the most preferred monoepoxides for this class of crosslinked dispersion are glycidyl acrylate and glycidyl methacrylate.

In a particularly preferred crosslinked dispersion embodiment within the aforementioned class, the monomers used in the addition copolymerization to form the dispersed polymer are characterized in that the alpha, beta ethylenically unsaturated monocarboxylic acid is methacrylic acid, the other copolymerizable monoethylenically unsaturated monomer is methylmethacrylate and the crosslinking monomer is glycidyl methacrylate. In this particularly preferred crosslinked dispersion embodiment, the preferred polymeric dispersion stabilizer is one in which ethylenically unsaturated monomers (i) and (ii) used to prepare the copolymer reactant (B) precursor of the polymeric dispersion stabilizer are methylmethacrylate and 2-ethylhexylacrylate respectively, and wherein one of the ethylenically unsaturated monomers (A) or (iii) of copolymer reactant (B) is glycidyl acrylate or glycidyl methacrylate and the other of said ethylenically unsaturated monomers (A) or (iii) is acrylic or methacrylic acid. Most preferred is the case wherein ethylenically unsaturated monomer (iii) of copolymer reactant (B) is glycidyl acrylate or glycidyl methacrylate and ethylenically unsaturated monomers (A) comprise acrylic or methacrylic acid.

The invention will be more fully understood from the following detailed examples which are merely exemplary of the multitude of compositions which fall within the scope of the invention which illustrate the use of the stabilizer compositions of the invention.

Coating compositions

The coating compositions of the invention comprise hydroxy functional film former, crosslinking agents bearing functionality capable of reacting with the hydroxy functional group of the film former and a flow control additive comprising a stable, crosslinked dispersion containing microgel particles. In addition the compositions of the invention may include conventional additives such as catalysts, anti-oxidants, UV absorbers, wetting agents, anti-static agents, pigments, plasticizers solvents, etc.

Flow control additive

The flow control additive employed in compositions of the invention is the stable, crosslinked dispersion containing microgel particles described above, with or without further stabilization as hereinafter described and is incorporated in the compositions in an amount ranging from about 0.5 to about 30, preferably from about 3 to about 15, parts of resin solids in the flow control additive per 100 parts of total resin solids in the composition. As noted above, the flow control additive enhances the flow characteristics of the compositions, thus promoting smoothness and evenness of film coat and is particularly advantageous in those instances wherein metallic pigment is incorporated in automotive topcoating enamels.

Film forming component

The film forming component of the compositions of the invention is a hydroxy functional material capable of crosslinking with a crosslinking agent having functionality thereon adapted to react with hydroxyl groups on the film former. As will be appreciated by those skilled in the art, there are numerous types of hydroxy functional film forming materials which may be crosslinked to form cured films on substrates. This film former may comprise one or more hydroxy functional polymers or copolymers as well as additional hydroxy functional monomeric materials if desired. Of course, additional film forming components, not bearing hydroxy functionality or bearing still other functionalities might also be included in the composition. These variations will be apparent to those skilled in the art.

Exemplary of the numerous hydroxy functional copolymers which may be employed as film formers in compositions to which the improvement of this invention applies are the various acrylic based copolymers, including particularly those which have number average molecular weights of at least 150 up to approximately 20,000 (preferably 2,300 to 3,600) and glass transition temperatures ranging from between

7

about −25°C and about 70°C. Typically, such copolymers may include between about 5 and about 50 (preferably 20 to 30) weight percent of monoethylenically unsaturated monomers bearing hydroxy functionality and between about 95 and about 50 weight percent of other monoethylenically unsaturated monomers. The hydroxy functional monomers provide the copolymer with its hydroxy functionality and are selected typically from hydroxy alkyl esters of monoethylenically unsaturated carboxylic acids. The list of such typical hydroxy functional monomers suitable for forming such copolymers is well known to those skilled in the art and could include, for example, 2-hydroxyethyl acrylate; 3-chloro-2-hydroxypropyl acrylate; 2-hydroxy-1-methylethyl acrylate; 2-hydroxypropyl acrylate 3-hydroxypropyl acrylate; 2,3-dihydroxypropyl acrylate; 2-hydroxybutyl acrylate; 4-hydroxybutyl acrylate; diethyleneglycol acrylate; 5-hydroxypentyl acrylate; 6-hydroxyhexyl acrylate; triethyleneglycol acrylate; 7-hydroxyheptyl acrylate; 2-hydroxyethyl methacrylate; 3-chloro-2-hydroxypropyl methacrylate; 2-hydroxy-1-methylethyl methacrylate; 2-hydroxypropyl methacrylate; 3-hydroxypropyl methacrylate; 2,3-dihydroxypropyl methacrylate, 2-hydroxybutyl methacrylate; 4-hydroxybutyl methacrylate; 3,4-dihydroxybutyl methacrylate; 5-hydroxypentyl methacrylate; 6-hydroxyhexyl methacrylate; 1,3-dimethyl-3-hydroxybutyl methacrylate; 5,6-dihydroxyhexyl methacrylate; and 7-hydroxyheptyl methacrylate. Preferred hydroxy functional monomers in such compositions are often $C_5$—$C_7$ hydroxy alkyl acrylates and/or $C_6$—$C_8$ hydroxy alkyl methacrylates, i.e., esters of $C_2$—$C_3$ dihydric alcohols and acrylic or methacrylic acids.

The remainder of monomers forming the such hydroxy functional copolymers typically are other monoethylenically unsaturated monomers which preferably are alpha, beta olefinically unsaturated monomers, i.e., monomers bearing olefinic unsaturation between the two carbons in the alpha and beta positions with respect to the terminus of an aliphatic carbon to carbon chain. As is well known, among the numerous alpha-beta olefinically unsaturated monomers which might be employed in such copolymers are acrylates, as defined herein, as well as mixtures of acrylates and vinyl hydrocarbons. Generally is such compositions in excess of 50 weight percent of the total are esters of $C_1$—$C_{12}$ monohydric alcohols and acrylic or methacrylic acids. Among monovinyl hydrocarbons suitable for use in forming copolymers of this type are those containing 8 to 12 carbon atoms and including styrene, alpha methylstyrene, vinyl toluene, t-butylstyrene and chlorostyrene. Generally when monovinyl hydrocarbons are employed, they constitute less than 50 weight percent of the copolymer. Also, other monomers such as vinyl chloride, acrylonitrile, methacrylonitrile, and vinyl acetate may be included in these compositions as modifying monomers; however, these modifying monomers should constitute only between about 0 and about 40 weight percent of the monomers in the copolymer.

As mentioned above, one or more hydroxy functional polymers or copolymers could be employed as the film forming material. For example, it may be desirable to employ hydroxy functional copolymers of varying molecular weight. Also, it may be desirable to include other hydroxy functional materials of the monomeric nature which would serve as reactive diluents in the compositions. These are only a few of the numerous types of combinations and modifications of film forming materials which could be employed.

Crosslinking agents

The other major conventional component of compositions to which the improvement of this invention is applicable is a crosslinking agent capable of reacting with the hydroxyl groups of the hydroxy functional film forming material to effect a cure of the composition. While it will be appreciated that the particular crosslinking agent is not critical to the invention and that many suitable materials may be selected, exemplary crosslinking agents are isocyanates and well known amino compounds.

Representative of isocyanate compounds useful as crosslinking agents in thermosetting coating compositions to which the improvement of the invention is applicable are polyisocyanates, i.e., compounds having two or more, preferably three or more, reactive isocyanate groups per molecule. These polyisocyanate crosslinking agents are included in compositions of the invention in amounts typically ranging from about 0.5 to about 1.6 isocyanate groups per hydroxyl group in the composition.

Polyisocyanates are well known in the art and numerous suitable isocyanates having two or more reactive isocyanate groups per molecule will be apparent to those skilled in the art. Among the many suitable polyisocyanates are aliphatic, cycloaliphatic and aromatic isocyanate compounds.

Amino crosslinking agents useful in compositions which the improvement of the invention may be applied are generally preferably condensation products of formaldehyde with melamine, substituted melamines, urea or substituted and unsubstituted benzoguanamine. Such multi functional amino compounds, which are widely used in the coating industry, may be used in monomeric, polymeric or a mixture of monomeric and polymeric forms.

Preferred intermediate solids composition

As discussed above, the preferred intermediate solids coating compositions of the invention comprise three primary components: (i) a film forming component comprising hydroxy functional copolymer; (ii) a butylated melamine formaldehyde crosslinking agent; and (iii) the flow control additive comprising a stable crosslinked dispersion as described above.

The film forming component of the intermediate solids composition comprises a hydroxy functional copolymer having a number average molecule weight ($M_n$) greater than about 5,000 and a glass transition temperature of between about −25°C and about 70°C. This hydroxy functional copolymer is formed from between about 5 and about 50, preferably between about 10 and about 30 weight percent of hydroxy functional monoethylenically unsaturated monomers and a remainder of other monoethylenically unsaturated monomers.

While numerous hydroxy functional monoethylenically unsaturated monomers may be employed in the preparation of copolymers useful as a film forming component in the compositions of the invention, preferred monomers of this type are selected from the group consisting of hydroxyl bearing aliphatic alcohol and esters of alpha, beta monoethylenically unsaturated carboxylic acids. Most preferably, the hydroxy functional monomers which provide the copolymer with its hydroxy functionality are selected from hydroxy alkyl esters of monoethylenically unsaturated carboxylic acids. Typical of such alpha, beta monoethylenically unsaturated carboxylic acids are acrylic, methacrylic and ethacrylic acids. Among the numerous hydroxy functional monomers in this preferred class of monomers suitable for preparing the copolymers of the film forming component of the intermediate solids compositions are those hydroxy functional monomers listed in the general description of the hydroxy functional film formers.

The remainder of other monoethylenically unsaturated monomers forming the hydroxy functional copolymer of the film forming component, i.e., between about 50 and about 95 weight percent, preferably between about 70 and about 90 weight percent, are preferably alpha-beta olefinically unsaturated monomers, i.e., monomers bearing olefinic unsaturation between the two carbon atoms in the alpha and beta positions with respect to the terminus of an aliphatic carbon to carbon chain.

In a preferred embodiment of the intermediate solids compositions, the remainder of other monoethylenically unsaturated monomers includes up to about 2 weight percent, based on the total weight of monomers used to prepare the hydroxy functional copolymer of an alpha, beta monoethylenically unsaturated carboxylic acid such as acrylic, methacrylic or ethacrylic acid.

The remainder of monoethylenically unsaturated monomers, other than the carboxylic acids discussed above, are preferably selected from acrylates (meaning esters of acrylic or methacrylic acids) as well as mixtures of acrylates and vinyl hydrocarbons. Preferably, in excess of 30 weight percent of the total copolymer monomers are esters of a $C_1$—$C_{12}$ monohydric alcohol and acrylic, methacrylic or ethacrylic acid, e.g., methylmethacrylate, ethylacrylate, butylacrylate, butylmethacrylate, hexylacrylate, 2-ethylhexylacrylate, laurylmethacrylate, etc. Among the monovinyl hydrocarbons suitable for use in forming such copolymers are those containing 8 to 12 carbon atoms and including styrene, alpha methylstyrene, vinyl toluene, t-butylstyrene and chlorostyrene. When such monovinyl hydrocarbons are employed, they should constitute less than about 50 weight percent of the copolymer. Other modifying vinyl monomers may also be included in this remainder of monoethylenically unsaturated monomers. These vinyl monomers such as vinyl chloride, acrylonitrile, methacrylonitrile, vinyl acetate, etc. should constitute only between about 0 and about 40 weight percent of the monomers of the hydroxy functional copolymer.

In preparing such copolymers suitable for use as the hydroxy functional film former of the intermediate solids compositions, the hydroxy functional monomers and the remaining monoethylenically unsaturated monomers are mixed and reacted, typically by conventional free radical initiated polymerization, in such proportions as to obtain the copolymers desired. A large number of free radical initiators are known to those skilled in the art and are suitable for this purpose. Polymerization is preferably carried out in solution using a solvent in which the hydroxy functional copolymer is soluble. Numerous solvents will be apparent to those skilled in the art.

In addition to the above discussed hydroxy functional copolymer, the hydroxy functional component of the intermediate solids compositions may also include other hydroxy functional materials in lesser amounts (i.e. up to a total of 50 parts, preferably less than 35 parts, and generally, although not necessarily 10 parts or more, of other hydroxy functional materials per 100 parts of the total hydroxy functional component). For example, the coating composition may further comprise one or more hydroxy functional copolymers having a number average molecular weight ($M_n$) of between about 1,500 and about 5,000 and a glass transition temperature between about −25°C and about 70°C. Such lower molecular weight hydroxy functional copolymers are generally formed from about 15 to about 35 weight percent, preferably from about 20 to about 30 weight percent, of hydroxy functional monoethylenically unsaturated monomers and a remainder of other monoethylenically unsaturated monomers. Suitable hydroxy functional and other monoethylenically unsaturated monomers are similar to those discussed above with respect to the higher molecular weight hydroxy functional copolymers.

The hydroxy functional film forming component of the intermediate solids coating compositions of the invention may also include, for example, one or more hydroxy functional oligoesters in an amount ranging from about 5 to about 50, preferably from about 10 to about 35, weight percent of the hydroxy functional film former. These suitable oligoesters are those described in U.S. Patent Application Serial No. 157,705 filed June 9, 1980 and include those (i) having a number average molecular weight ($M_n$) of between about 150 and about 3,000, (ii) bearing at least two hydroxyl groups per molecule, and (iii) being selected from the group consisting of: (a) esterification reaction products of polycarboxylic acids and monoepoxides; (b) esterification reaction products of polyepoxides and monocarboxylic acids, preferably monocarboxylic acids containing no ethylenic unsaturation and bearing no hydroxy functionality; (c) esterification reaction products of hydroxy functional carboxylic acids and mono- or polyepoxides, preferably monoepoxide; (d)

9

esterification reaction products of monocarboxylic acids and hydroxy functional mono- or polyepoxides, preferably monoepoxides; and (e) mixtures of (a)—(d).

Still other hydroxy functional materials which will be apparent to those skilled in the art may be included in minor amounts.

The intermediate solids compositions of the invention comprise between about 20 and about 100, preferably between about 30 and about 80, parts per 100 parts of said film forming component of butylated melamine formaldehyde crosslinking agent having a number average molecular weight of between about 700 and about 2,500.

Suitable butylated melamine formaldehyde resins are those prepared by condensation of melamine, formaldehyde and butyl alcohol either in a one-step process under acidic conditions or in a two-step process in which the melamine and formaldehyde are reacted under basic conditions followed by etherification under acidic conditions. The molecular weight is governed by the ratios of the three components. High ratios of formaldehyde to melamine and high ratios of alcohol to formaldehyde tend to yield lower molecular weight resins. The molar ratio of formaldehyde to melamine ranges from 3.0 to 6, while the molar ratio of butanol to melamine may range from 6 to 12. Only a portion of the alcohols react and the remainder acts as a solvent. Molecular weight distributions are generally wide with the $M_w$ range from about 2,000 to about 10,000 and the $M_n$ ranging as stated above.

Preferred high solids composition

As discussed above, the preferred high solids coating compositions of the invention comprise three primary components: (i) a film forming component consisting essentially of a polymeric component having a number average molecular weight of less than about 5,000; (ii) a crosslinking agent comprising monomeric methalyated melamine resin; and (iii) the flow control additive comprising a stable crosslinked dispersion as described above.

The film forming component of the high solids compositions consists essentially of a polymeric component having a number average molecular weight of less than about 5,000. The polymeric component comprises at least about 50 percent by weight of hydroxy functional copolymer having a number average molecular weight ($\overline{M}_n$) of between about 1,500 and about 5,000 and a glass transition temperature of between about −25°C and about 70°C. This hydroxy functional copolymer is formed from between about 15 and about 35, preferably between about 20 and about 30, weight percent of hydroxy functional monoethylenically unsaturated monomers, between about 2 and about 5 weight percent of alpha, beta olefinically unsaturated carboxylic acids and a remainder of other monoethylenically unsaturated monomers.

While numerous hydroxy functional monoethylenically unsaturated monomers may be employed in the preparation of copolymers useful as a film forming component in the compositions of the invention, preferred monomers of this type are those described above in the description of the preferred intermediate solids compositions of the invention.

In the preferred hydroxy functional copolymers useful in the high solids compositions of the invention, the alpha, beta olefinically unsaturated carboxylic acids in the monomer mix used to make the hydroxy functional copolymer are included in an amount ranging from about 2 to about 4 weight percent and are selected from acrylic, methacrylic and ethacrylic acids. It will be appreciated that other alpha, beta olefinically unsaturated carboxylic acids may also be employed.

The remainder of other monoethylenically unsaturated monomers forming the hydroxy functional copolymer of the film forming component, i.e., between about 60 and about 83 weight percent, preferably between about 65 and about 78 weight percent, are preferably alpha-beta olefinically unsaturated monomers, i.e., monomers bearing olefinic unsaturation between the two carbon atoms in the alpha and beta positions with respect to the terminus of an aliphatic carbon to carbon chain.

The remainder of monoethylenically unsaturated monomers are preferably selected from acrylates (meaning esters of acrylic or methacrylic acids) as well as mixtures of acrylates and vinyl hydrocarbons. Preferably, in excess of 30 weight percent of the total copolymer monomers are esters of a $C_1$—$C_{12}$ monohydric alcohol and acrylic, methacrylic or ethacrylic acid, e.g., methylmethacrylate, ethylacrylate, butylacrylate, butylmethacrylate, hexylacrylate. 2-ethylhexylacrylate, laurylmethacrylate, etc. Among the monovinyl hydrocarbons suitable for use in forming such copolymers are those containing 8 to 12 carbon atoms and including styrene, alpha methylstyrene, vinyl toluene, t-butylstyrene and chlorostyrene. When such monovinyl hydrocarbons are employed, they should constitute less than about 50 weight percent of the copolymer. Other modifying vinyl monomers may also be included in this remainder of monoethylenically unsaturated monomers. These vinyl monomers, such as vinyl chloride, acrylonitrile, methacrylonitrile, vinyl acetate, etc. should constitute only between about 0 and about 40 weight percent of the monomers of the hydroxy functional copolymer.

In preparing such copolymers suitable for use in the polymeric component of the film forming component of the high solids compositions of the invention, the hydroxy functional monomers and the remaining monoethylenically unsaturated monomers are mixed and reacted, typically by conventional free radical initiated polymerization in the manner discussed above.

In addition to the above discussed hydroxy functional copolymer, other hydroxy functional polymeric materials may be employed in the polymeric component or film forming component of the compositions of the invention. Such other hydroxy functional polymeric materials will of course be included in lesser amounts (i.e. up to a total of about 50 parts, preferably less than about 30 parts, of such other hydroxy functional materials per 100 parts of the polymeric component of the film forming component of the compositions). For example, the polymeric component may further comprise one or more hydroxy functional oligoesters as discussed above.

Still other hydroxy functional materials which will be apparent to those skilled in the art may be included in minor amounts in the polymeric component of the film forming component of the high solids compositions of the the invention. Still further, minor amounts (i.e., up to about 25 parts, preferably less than about 10 parts, per 100 parts of the polymeric component) of other polymeric materials bearing no hydroxy functionality or other functionalities which do not interfere with the crosslinking reaction between the hydroxy functional materials and the crosslinking agent, may be employed.

The high solids coating compositions of the invention include between about 20 and about 100 parts, preferably between about 40 and about 80 parts per 100 parts of the film forming component of a crosslinking agent comprising monomeric methylated melamine resin having a number average molecular weight of between about 350 and about 1,000. Monomeric methylated melamine resins are prepared by the co-condensation of melamine, formaldehyde and methyl alcohol, usually in a two-step procedure. In order to maximize the amount of monomeric structure, the ratio of condensed formaldehyde to melamine is high, usually greater than 5 to 1 and more preferably greater than 5.5 to 1. The melamine formaldehyde condensation is usually done under basic conditions. The etherification is then accomplished under acidic conditions with excess amounts of methanol to maximize the etherification and minimize condensation reactions that lead to dimers, trimers, etc. The ratios of methanol to melamine may range from 8 to 30 in this reaction step. Molecular weight ranges for this type of crosslinking material are between about 450 and 1,500 for weight average molecular weight and between about 350 and 1,000 as indicated above for number average molecular weight. The ratios of condensed methanol to melamine ranges from about 4.8 to about 6.

The high solids compositions of the invention also may include up to about 50, preferably up to about 30, weight percent, based on the total weight of crosslinking agent, of a butylated melamine formaldehyde crosslinking agent of the type described above in connection with the preferred intermediate solids compositions of the invention.

Further stabilization of the crosslinked dispersions alone or as flow control additive used in coating compositions of the invention is effected by adding to the crosslinked dispersions a further stabilizer which, except for any solvent present in the stabilizer composition, consists essentially of butylated melamine formaldehyde resin having a number average molecular weight in the range of from about 700 to about 2,500. This stabilizer is included in the crosslinked dispersion in an amount ranging from about 25 to about 75 parts, preferably from about 40 to about 60 parts, of resin solids per 100 parts of total resin solids in the crosslinked dispersion. Preferably the further stabilized dispersion of the invention have a solids level after addition of the further stabilizer and any additional solvent that may be desired in the range of 30 to 70 percent, most preferably in the range of 40 to 60 percent. Generally the further additive will be added to the crosslinked dispersion as a solution comprising one or more solvents for the butylated melamine formaldehyde resin. Preferably the further stabilizer should consist essentially of a solution of butylated melamine formaldehyde resin in an organic solvent in an amount such that the percentage solids of the butylated melamine formaldehyde resin in the solvent ranges from about 50 to about 90 percent. In a particularly preferred embodiment the further stabilizer consists essentially of a 65 percent solids solution of the butylated melamine formaldehyde resin in a 2 to 1 solution of butyl acetate and butyl alcohol.

Suitable butylated melamine formaldehyde resins for use as the further stabilizing additive of the invention are those prepared by condensation of melamine, formaldehyde and butyl alcohol either in a one step process under acidic conditions or in a two step process in which the melamine and formaldehyde are reacted under basic conditions followed by etherification under acidic conditions. The molecular weight is governed by the ratios of the three components. High ratios of formaldehyde to melamine and high ratios of alcohol to formaldehyde tend to yield lower molecular weight resin. The molar ratio of formaldehyde to melamine ranges from about 3.0 to 6, while the molar ratio of butanol to melamine may range from 6 to 12. Only a portion of the alcohols react and the remainder acts as a solvent. Molecular weight distributions are generally wide, with the $M_w$ range being from about 2,000 to about 10,000 and the $M_n$ ranging as stated above.

The invention will be more fully understood from the following detailed examples which are merely exemplary of the multitude of compositions which fall within the scope of the invention.

Example 1

A 2-liter flask equipped with a stirrer, thermometer, dropping funnel, and water condenser was charged with 590 grams n-butyl acetate and 0.4 gram t-butyl perbenzoate initiator. The initiator solution was heated to 120°C. While maintaining the temperature at 120°C, a mixture of 496 grams 2-ethylhexyl acrylate, 224 grams methyl methacrylate, 80 grams glycidyl methacrylate, and 4.2 grams t-butyl peroctoate was added dropwise over a period of 3 hours. One hour after the addition, a mixture of 0.84 grams t-butyl peroctoate and 25 grams n-butyl acetate was added and the reaction was allowed to continue for an additional 2 hours. Then a mixture of 1.28 grams hydroquinone, 6.4 grams methacrylic acid, 1.2 grams dimethyl dodecylamine, and 140 grams of n-butyl acetate was added to the reaction mixture. The reaction was held at 120°C until the acid number was 0.2 mg KOH/gram. The reaction product was a darkly colored solution having a solids content of 50.6% by weight, a Gardner viscosity of F, a number average molecular weight of 8545, and a weight average molecular weight of 28,865 determined by gel permeation chromatography using polystyrene calibration.

Examples 2—7

Following the procedure of Example 1, a variety of stabilizers of various kind and ratio of monomers was prepared. Table I summarizes the monomers ratio and properties of some typical stabilizers.

TABLE I

| Example | $M_1$ Non polar monomer | $M_2$ Polar monomer | $M_3$ Functional monomer | $M_4$ Complementary unsaturated monomer | Ratio of $M_1/M_2/M_3/M_4$ | Gardner viscosity | Solids content |
|---|---|---|---|---|---|---|---|
| 2 | EHA | MMA | GMA | MAA | 54/40/6/1 | S | 58.3% |
| 3 | EHA | MMA | GMA | MAA | 59/35/6/2 | T | 59.1% |
| 4 | EHA | MMA | GMA | MAA | 59/35/6/1 | — | 57.1% |
| 5 | EHA | MMA | GMA | MAA | 65/25/10/0.8 | G—H | 53.7% |
| 6 | LA | MMA | GMA | MAA | 65/25/10/1.0 | D | 49.3% |
| 7 | EHA | MMA | GMA | MMA | 64/30/6/1 | N | 57.2% |

Notes:
  The following abbreviations are used:
    EHA=2-Ethylhexylacrylate;
    MMA=Methyl methacrylate;
    GMA=Glycidyl methacrylate;
    MAA=Methacrylic acid;
    LA=Lauryl acrylate

Example 8

A nonaqueous acrylic dispersion polymer was prepared by heating to 90°C 991 grams heptane, 41 grams methyl methacrylate, 8 grams of stabilizer from Example 5, and 0.7 gram azobis (isobutyronitrile) in a 5-liter flask which was equipped with a stirrer, thermometer, addition funnel, and water condenser. The reaction was held at 90°C for 30 minutes; then a mixture of 1022 grams methyl methacrylate, 55 grams glycidyl methacrylate, 34 grams methacrylic acid, 3.4 grams dimethyl dodecylamine, 152 grams of stabilizer from Example 5, 427 grams Espesol 260H (trade mark of Charter Chemical Co.) and 7.7 grams azobis (isobutyronitrile) was added dropwise over a period of 4 hours. One hour after the addition, 0.77 gram azobis (isobutyronitrile) dissolved in 150 grams n-butyl acetate was added. The reaction was allowed to continue for an additional 2 hours. The resulting milky white acrylic dispersion polymer has a solids content of 43.0% by weight and a Ford No. 2 Cup viscosity of 28.9 seconds.

Example 9

Using the procedure of Example 8, an acrylic dispersion polymer was prepared using the stabilizer of Example 6. The resulting dispersion has a solids content of 43.5% by weight and a Ford No. 2 Cup viscosity of 26.3 seconds.

Example 10

(A) Flow control additive I

An acrylic stabilizer copolymer with a composition of 55/35/10/0.8 2-ethylhexyl acrylate/methyl methacrylate/glycidyl methacrylate/methacrylic acid was prepared in accordance with the procedure of Example 1. The copolymer had a I viscosity (Gardner-Holdt) at 50% solids in n-butyl acetate.

A flow control additive was prepared according to the procedure of Example 8 in which 1063 parts of methyl methacrylate, 55 parts of glycidyl methacrylate and 34 parts of methacrylic acid are reacted in the presence of 57 parts of the above acrylic stabilizer solution. The additive had a solids content of 43% by weight in 60/25/15 heptane/Naphtha/butyl acetate.

(B) Silver metallic enamel

A silver metallic enamel was prepared by mixing the following ingredients.

|  | Parts by wt. |
| --- | --- |
| Acrylic resin A[a] | 2166 |
| Acrylic resin B[b] | 1634 |
| Melamine resin X[c] | 1509 |
| Flow control additive I | 640 |
| Aluminum paste (60% aluminum flake) | 175 |
| Polybutyl acrylate (60% in xylene) | 31 |
| Isobutyl acetate | 1000 |
| Ethylene glycol ethyl ether acetate | 745 |

The enamel was sprayed on a primed steel panel and cured for 17 minutes at 265°C in a forced air oven. The panel had excellent brilliance and distinctness of image due to the even distribution of aluminum flake in the paint. A control enamel with no flow control additive appeared much darker and showed an uneven distribution of aluminum flake or mottling.

[a] Acrylic Resin A is a typical automotive thermoset acrylic resin with a monomeric composition of 37/20/27/15/1 styrene/methyl methacrylate/butyl acrylate/hydroxy propylmethacrylate/acrylic acid. The resin has Y viscosity taken cut to 55% solids in 70/12/18 cellosolve acetate/butanol/toluene.

[b] Acrylic Resin B is an automotive thermoset acrylic resin with a 30/30/20/19/1 styrene/butyl methacrylate/2-ethylhexyl/acrylate/hydroxypropyl methacrylate/acrylic acid composition. The resin had a T viscosity at 50% nonvolatiles in 50/50 cellosolve acetate/isopropyl acetate.

[c] Melamine Resin X is a butylated melamine resin with a U viscosity at 65% nonvolatiles in 2/1 litres of butyl acetate/butyl alcohol and a ASTM D1198 mineral spirits tolerance of 300.

# 0 051 400

Example 11

A white enamel was prepared by mixing the following ingredients.

|  | Parts by weight |
|---|---|
| Titanium dioxide millbase[d] | 2891 |
| Acrylic resin C[e] | 1241 |
| Acrylic resin D[f] | 1099 |
| Melamine resin X (same as in Ex. 10) | 1261 |
| Polybutyl acrylate (60% in xylene) | 25 |
| Isobutyl acetate | 2276 |
| Ethylene glycol monoethyl ether acetate | 558 |
| Flow control additive I | 133 |

A primed panel was sprayed so that a film thickness wedge of 43.2 μm (1.7 mils) to 88.9 μm (3.5 mils) was realized after the panel was baked for 17 minutes at 129.4°C (265°F). Sagging of the film began at the 63.5 μm (2.5 mil) thickness region. A control enamel which did not contain the flow control additive sagged at about 48.3 μm (1.9 mils).

[d] The Millbase was prepared from:

| Titanium dioxide | 600 parts |
|---|---|
| Acrylic resin D | 250 parts |
| VM & P Naphtha | 110 parts |
| Methyl amyl ketone | 50 parts |
| Butyl acetate | 40 parts |
| Toluene | 40 parts |
| Xylene | 8 parts |

[e] Acrylic Resin C is an acrylic copolymer of 30/30/20/18/2 styrene/butyl methacrylate/2-ethylhexyl acrylate/hydroxypropyl methacrylate/acrylic acid. The resin had a Z viscosity at 50% solids in xylene.

[f] Acrylic Resin D is an acrylic copolymer of 28/30/20/20/2 styrene/butyl methacrylate/ethylhexyl acrylate/hydroxypropyl methacrylate/acrylic acid. The resin had a T viscosity at 60% solids in a 1/1 methyl amyl ketone/VM & P Naphtha.

Example 12

(A) Flow control additive II

An acrylic stabilizer with a comonomer composition of 59/35/6/1 ethylhexyl acrylate/methyl methacrylate/glycidyl methacrylate/methacrylic acid was prepared according to the procedure of Example 1. The copolymer had an L viscosity at 58% solids in butyl acetate. A flow control additive was prepared from:

15

# 0 051 400

1016 g of methyl methacrylate

52 g of glycidyl methacrylate

32 g of methacrylic acid

186 g of acrylic stabilizer

8.8 g of azobisisobutyronitrile

3.2 g of dimethyl dodecanoic amine

7.4 g of octyl neicaptan

930 g of heptane

394 g of VM & P Naphtha

134 g of butyl acetate

according to the procedure of Example 8. The dispersion had a % nonvolatiles of 43% and a No. 2 Ford Cup viscosity of 29.1 seconds.

(B) Silver metallic high solids enamel

A silver metallic enamel was prepared by mixing the following ingredients:

|  | Parts by wt. |
| --- | --- |
| Acrylic resin E[g] | 3475 |
| Cymel 325[h] | 1799 |
| RG-82[i] | 360 |
| Flow control additive II (6.5% solids/total solids) | 700 |
| Aluminum flake dispersion (60% Al) | 205 |
| Methyl ethyl ketone | 209 |
| Ethylene glycol ethyl ether acetate | 767 |
| Isopropyl alcohol | 330 |
| Ethyl acetate | 250 |
| Diethylene glycol monobutyl ether | 160 |

The enamel was sprayed on a primed metal panel to yield a film with a wedged film thickness of 1.5 to 3.0 after baking at 140.5°C (285°F) for 20 minutes. The paint sagged at the 50.8 μm (2.0 mil) film thickness and higher. When the paint formula was adjusted to contain 7.5% of the flow control additive, the sag resistance improved to 55.8 μm (2.2 mils). Similar paint with no flow control additive sagged at less than 25.4 μm (1.0 mil) film thickness.

[g] Acrylic Resin E is a 25/23/20/30/2 styrene/butyl methacrylate/ethylhexyl acrylate/hydroxyethyl acrylate/acrylic acid copolymer which has a Z3 viscosity at 78% NV in methyl amyl ketone.
[h] Cymel® 325 is a methylated melamineformaldehyde resin available at 80% NV from American Cyanamid Company.
[i] RG-82® is a product of Eastman Chemical Products, Inc. and is described as a reactive diluent with a hydroxyl equivalent weight of 91.

Example 13

A nonaqueous acrylic dispersion polymer was prepared by heating to 90°C, 838 grams heptane, 65 grams methyl methacrylate, 4.6 grams azobis (isobutyronitrile) and 11 grams of stabilizer from Example 7 in a 5 liter flask equipped with a stirrer, thermometer, addition funnel, and water condenser. The reaction

16

was held at 90°C for 30 minutes. Then a mixture of 156 grams hydroxyethyl acrylate, 40 grams methacrylic acid, 467 grams styrene, 303 grams butyl methacrylate, 311 grams ethylhexyl acrylate, 395 grams of stabilizer from Example 7, 11 grams octyl mercaptan, 211 grams methyl methacrylate and 10 grams azobis (isobutyronitrile) was added dropwise over a period of 4 hours. One hour after the addition, 12 grams azobis (isobutyronitrile) dissolved in 258 grams n-butyl acetate was added. The reaction was allowed to continue for an additional 2 hours. The 200 grams n-butyl acetate was added. The resulting milky white dispersion has a solids content of approximately 52% by weight. The stability of the dispersion was excellent.

Example 14
Stabilized flow control additive I
An acrylic stabilizer copolymer with a composition of 65/24/10/1.0 2-ethylhexyl acrylate/methyl methacrylate/glycidyl methacrylate/methacrylic acid was prepared in accordance with the procedure of Example 1. The copolymer had a G viscosity (Gardner-Holdt) at 50% solids in n-butyl acetate.

A flow control additive was prepared according to the procedure of Example 8 in which 1063 parts of methyl methacrylate, 55 parts of glycidyl methacrylate and 34 parts of methacrylic acid in the presence of 160 parts of the acrylic stabilizer solution. The additive had a viscosity of 26.5 seconds on a No. 2 Ford Cup at a 42.9% solids.

A stabilized flow control additive was prepared by mixing 1400 parts of the additive with 938 parts of Syn U Tex 4113E[a] and 148 parts of isopropyl acetate. The stabilized flow control additive has a viscosity of 34.2 seconds on a No. 2 Ford Cup at 47.5% solids.

[a] Syn U Tex 4113E (trade mark) is a product of Celanese Plastics and Specialties Company. The material specifications are T—W viscosity (Gardner-Holdt) at 65±1% nonvolatile in 2/1 butyl acetate/butanol.

Example 15
Silver metallic enamel
A silver metallic enamel was prepared by mixing the following ingredients.

|  | Parts by wt. |
| --- | --- |
| Acrylic resin A[a] | 2166 |
| Acrylic resin B[b] | 1634 |
| Syn U Tex 4113E (trade mark) | 1066 |
| Flow control additive (Example 14) | 1152 |
| Aluminum paste (60% aluminum flake) | 175 |
| Polybutyl acrylate (60% in xylene) | 31 |
| Isobutyl acetate | 930 |
| Ethylene glycol ethyl ether acetate | 745 |

The enamel was sprayed on a primed steel panel and cured for 17 minutes at 265°C in a forced air oven. The panel had excellent brilliance and distinctness of image due to the even distribution of aluminum flake in the paint. A control enamel with no flow control additive appeared much darker and showed an uneven distribution of flake.

[a] Acrylic Resin A is a typical automotive thermoset acrylic resin with a monomeric composition of 37/20/27/15/1 styrene/methyl methacrylate/butyl acrylate/hydroxy propylmethacrylate/acrylic acid. The resin has Y viscosity taken cut to 55% solids in 70/12/18 cellosolve acetate/butanol/toluene.
[b] Acrylic Resin B is an automotive thermoset acrylic resin with a 30/30/20/19/1 styrene/butyl methacrylate/2-ethylhexyl/acrylate/hydroxypropyl methacrylate/acrylic acid composition. The resin had a T viscosity at 50% nonvolatiles in 50/50 cellosolve acetate/isopropyl acetate.

17

Example 16
White enamel
A white enamel was prepared by mixing the following ingredients.

|  | Parts by wt. |
|---|---|
| Titanium dioxide millbase[d] | 2891 |
| Acrylic resin C[e] | 1241 |
| Acrylic resin D[f] | 1099 |
| Syn U Tex 4113E | 1173 |
| Flow control additive (Example 14) | 229 |
| Polybutyl acrylate (60% in xylene) | 25 |
| Isobutyl acetate | 2268 |
| Ethylene glycol monoethyl ether acetate | 558 |

A primed panel was sprayed so that a film thickness wedge of 43—89 μm (1.7 to 3.5 mils) was realized after the panel was baked for 17 minutes at 129.4°C (265°F). Sagging of the film began at the 63 μm (2.5 mil) thickness region. A control enamel which did not contain the flow control additive sagged at about 48 μm (1.9 mils).

[d] The Millbase was prepared from:

| Titanium dioxide | 600 parts |
|---|---|
| Acrylic resin D | 250 parts |
| VM & P Naphtha | 110 parts |
| Methyl amyl ketone | 50 parts |
| Butyl acetate | 40 parts |
| Toluene | 40 parts |
| Xylene | 8 parts |

[e] Acrylic Resin C is an acrylic copolymer of 30/30/20/18/2 styrene/butyl methacrylate/2-ethylhexyl acrylate/hydroxypropyl methacrylate/acrylic acid. The resin had a Z viscosity of 50% solids in xylene.
[f] Acrylic Resin d is an acrylic copolymer of 28/30/20/20/2 styrene/butyl methacrylate/ethylhexyl acrylate/hydroxypropyl methacrylate/acrylic acid. The resin had a T viscosity at 60% solids in a 1/1 methyl amyl ketone/VM & P Naphtha.

Example 17
Stabilized flow control additive II
An acrylic stabilizer with a comonomer composition of 62/32/6/1 ethylhexyl acrylate/methyl methacrylate/glycidyl methacrylate/methacrylic acid was prepared according to the procedure of Example 14. The copolymer had an R viscosity at 56.2% solids in butyl acetate. A flow control additive was prepared from:

| 1063 | g of methyl methacrylate |
|---|---|
| 55 | g of glycidyl methacrylate |
| 34 | g of methacrylic acid |
| 160 | g of acrylic stabilizer |
| 8.4 | g of azobisisobutyronitrile |

18

3.4 g of dimethyl dodecanoic amine

7.7 g of octyl melcaptan

991 g of heptane

427 g of VM & P Naphtha

150 g of butyl acetate

according to the procedure of Example 8. The dispersion had a % nonvolatiles of 43% and a No. 2 Ford Cup viscosity of 26.8 seconds.

A stabilized flow control additive was prepared by mixing 1000 grams of the dispersion, 670 grams of Syn U Tex 4113E (trade mark) and 106 grams of isopropyl acetate. The stabilized additive had a viscosity of 37.0 seconds on a No. 2 Ford Cup at 48.2% solids.

Example 18
High solids white enamel
A white enamel was prepared by mixing the following ingredients.

|  | Parts by wt. |
| --- | --- |
| Acrylic resin G[a] | 3362 |
| Cymel 325[b] | 1381 |
| Flow control additive (Example 17) | 618 |
| Phenyl acid phosphate | 32 |
| White millbase | 3077 |
| Butanol | 361 |
| Methanol | 242 |
| 2-Ethylhexyl acetate | 245 |
| Monobutyl ether of diethylene glycol | 140 |
| Methyl amyl ketone | 441 |

The white millbase was prepared from:

|  |  |
| --- | --- |
| Titanium dioxide | 2215 |
| Acrylic resin H[c] | 385 |
| Methyl amyl ketone | 446 |
| Isopropyl acetate | 25 |

The enamel has a weight solids content of 66% and a No. 4 Ford Cup viscosity of 31.5 seconds. When sprayed on a primed panel and cured at 129.4°C (265°F) for 20 minutes, no sagging was observed at film thicknesses below 70 microns film thickness.

[a] Acrylic Resin G is an acrylic copolymer of 71/25/4 butyl methacrylate/hydroxyethyl acrylate/acrylic acid which has a Z1 viscosity at 80% in methyl amyl ketone.
[b] Cymel 325 (trade mark) is a methylated formaldehydemelamine resin at 80% NV and is a commercial product of American Cyanamid Company.
[c] Acrylic Resin H is an acrylic copolymer of 68/30/2 butyl methacrylate/hydroxyethyl acrylate/acrylic acid which has a Z viscosity at 80% NV in methyl amyl ketone.

Example 19
High solids green metallic enamel
A dark green enamel with improved aluminum control and good sag resistance was prepared by mixing the following ingredients.

|  | Parts by wt. |
|---|---|
| Acrylic resin G | 3586 |
| Cymel 325 (trade mark) | 1370 |
| Flow control additive (Example 17) | 1000 |
| Phenyl acid phosphate | 24 |
| Aluminum paste[1] | 128 |
| Yellow millbase[2] | 603 |
| Blue millbase[3] | 185 |
| Black millbase[4] | 254 |
| Methanol | 225 |
| Ethyl acetate | 177 |
| Butyl acetate | 177 |
| Methyl amyl ketone | 201 |
| Cellosolve acetate | 112 |
| Butyl alcohol | 203 |
| Ethylhexyl acetate | 81 |

The enamel was 60% weight solids at 29 seconds viscosity in a No. 4 Ford Cup.

[1] The aluminum paste was a mixture of:

|  |  |
|---|---|
| Acrylic resin H | 3125 |
| Aluminum flake | 25 |
| Naphtha. | 12.2 |
| Butyl alcohol | 6.5 |
| Cellosolve acetate | 25 |

[2] The yellow millbase was a mixture of:

|  |  |
|---|---|
| Yellow shade phthalocyanine green | 90 |
| Acrylic resin H | 181 |
| Methyl amyl ketone | 120 |
| Butyl alcohol | 211 |

20

# 0 051 400

(3) The blue millbase was a mixture of:

| | |
|---|---|
| Phthalocyanine blue | 15 |
| Melamine resin X | 37 |
| Butyl alcohol | 133 |

(4) The black millbase was a mixture of:

| | |
|---|---|
| Furnace black | 13 |
| Acrylic resin H | 196 |
| Methanol | 21 |
| Xylene | 24 |

## Claims

1. A dispersion comprising an organic liquid, dispersed particles of an addition polymer which are insoluble in said organic liquid, and a polymeric dispersion stabilizer characterised in that the said stabilizer comprises a copolymer which is the reaction product of ethylenically unsaturated monomers (A) bearing functionality capable of condensation reaction with complementary functionality of said copolymer reactant (B) which comprises a random copolymer of

(i) from 20 to 45 weight percent of ethylenically unsaturated monomers, homopolymers of which are substantially insoluble in the said organic liquid;

(ii) from 40 to 75 weight percent of ethylenically unsaturated monomers, homopolymers of which are substantially soluble in said organic liquid; and

(iii) from 2 to 15 weight percent of ethylenically unsaturated monomers bearing said complementary functionality capable of condensation reaction with said ethylenically unsaturated monomers (A), said ethylenically unsaturated monomers (A) being reacted with said copolymer reactant (B) in an amount sufficient to react with at least 10 percent of said complementary functionality of said copolymer reactant (B).

2. A dispersion in accordance with claim 1 wherein one of said ethylenically unsaturated monomers (i) or (ii) comprises an ester of a $C_4$—$C_{18}$ aliphatic alcohol and acrylic, methacrylic or ethacrylic acid, and the other of said ethylenically unsaturated monomers (i) or (ii) comprises an acrylic monomer selected from (a) esters of $C_1$—$C_3$ aliphatic alcohols and acrylic, methacrylic or ethacrylic acids, (b) acrylic and methacrylic acids, and (c) ethylene and propylene glycol monesters of acrylic, methacrylic or ethacrylic acids.

3. A dispersion in accordance with claim 2 wherein said ethylenically unsaturated monomer (i) is methylmethacrylate, and said ethylenically unsaturated monomer (ii) is 2-ethylhexylacrylate.

4. A dispersion in accordance with claim 3 wherein one of said ethylenically unsaturated monomers (A) or (iii) is glycidyl acrylate or glycidyl methacrylate and the other of said ethylenically unsaturated monomers (A) or (iii) is acrylic or methacrylic acid.

5. A dispersion in accordance with any one of claims 1 to 4 wherein said ethylenically unsaturated monomers (i), (ii) and (iii) used in preparation of said copolymer reactant (B) and said ethylenically unsaturated monomers (A) which are reacted with said copolymer reactant (B) to form said polymeric dispersion stabilizer include acrylic monomers.

6. A dispersion in accordance with any one of claims 1 to 5 wherein said dispersed particles comprise microgel particles, formed by addition polymerization of:—

(a) from about 1 to about 10 mole percent each of first and second ethylenically unsaturated monomers bearing functionality capable of crosslinking reaction with the other and

(b) from about 98 to about 80 mole percent of at least one other ethylenically unsaturated monomer in the presence of the said organic liquid, which is a solvent for the polymerisable monomers but a non-solvent for the resulting addition polymer.

7. A dispersion in accordance with claim 6 wherein the functionalities of the said first and second ethylenically unsaturated monomers (a) respectively are: acid and epoxide; epoxide and amine; acid anhydride and hydroxyl; acid anhydride and amine; acid anhydride and mercaptan; isoycanate and hydroxyl; hemiformal and amide; carbonate and amine; cycloimide and amine; cycloimide and hydroxyl; or imine and alkoxysilane.

8. A dispersion in accordance with claim 7 wherein said addition polymer is formed from about 1 to about 10 mole percent of alpha, beta-ethylenically unsaturated monocarboxylic acid, from about 98 to about 80 mole percent of at least one other copolymerizable monoethylenically unsaturated monomer and from about 1 to about 10 mole percent of ethylenically unsaturated crosslinking monoepoxide monomers.

21

9. A dispersion in accordance with claim 8 wherein the addition polymer is formed from methylmethacrylate and glycidylmethacrylate.

10. A dispersion in accordance with any one of claims 7 to 10 wherein the organic liquid and the ethylenically unsaturated monomers (i) and (ii) of the said copolymer (B) are selected such that homopolymers of the said monomers (i) and (ii) of the said copolymer (B) would be either substantially soluble or substantially insoluble in said organic liquid as a result of relative polarities of said homopolymers and said organic liquid.

11. A dispersion in accordance with any one of claims 5 to 10 which comprises, a further stabilizer, butylated melamine formaldehyde resin having a number average molecular weight ($\overline{M}_n$) in the range of from about 700 to about 2,500, said further stabilizer being included in said crosslinked dispersion in an amount ranging from about 15 to about 75 parts of resin solids per 100 parts total resin solids in said crosslinked dispersion.

12. A dispersion in accordance with any one of claims 5 to 11 wherein the organic liquid comprises an aliphatic hydrocarbon.

13. A coating composition comprising (I) an hydroxy-functional film-forming component, (II) a crosslinking agent bearing functionality capable of reacting with the hydroxyl groups of the film-forming component, and (III) a flow control additive comprising a dispersion in accordance with any one of claims 5 to 12.

14. A coating composition according to claim 13 wherein the film forming component (I) comprises an hydroxy functional copolymer having a number average molecular weight ($\overline{M}_n$) of from greater than about 150 up to about 20,000 and a glass transition temperature ($T_g$) ranging from between about $-25°C$ and about 70°C, said copolymer being formed from about 5 to about 50 weight percent of hydroxy functional monoethylenically unsaturated monomers and between about 95 and about 50 weight percent of other monoethylenically unsaturated monomers; and the crosslinking agent (II) comprises an amino- or isocyanate compound.

15. A coating composition according to claim 13 or claim 14 wherein the flow control additive (III) is present in an amount of from about 0.5 to about 30 parts of resin solids in said flow control additive per 100 parts total resin solids in said composition.

16. A coating composition in accordance with claim 14 or claim 15 wherein said hydroxy functional monoethylenically unsaturated monomers from which said hydroxy functional copolymer of the film forming component (I) is prepared are selected from hydroxy bearing aliphatic alcohol esters of monoethylenically unsaturated carboxylic acids.

17. A coating composition in accordance with any one of claims 14 to 16 wherein said other monoethylenically unsaturated monomers from which the hydroxy-functional copolymer of the film forming component (I) is prepared are selected from acrylates, methacrylates, monovinyl hydrocarbons having between 8 and 12 carbon atoms and other vinyl monomers.

18. A coating composition in accordance with claim 17 wherein said other monoethylenically unsaturated monomers from which the hydroxy-functional copolymer of the film-forming component (I) is prepared also include alpha, beta monoethylenically unsaturated monomers.

19. A coating composition in accordance with any one of claims 14 to 18 wherein said hydroxy functional copolymer of said film forming component (I) has a number average molecular weight ($\overline{M}_n$) of greater than about 5,000 and said crosslinking agent (II) comprises between about 20 to about 100 parts per 100 parts of said film forming component of butylated melamine formaldehyde having an average molecular weight ($\overline{M}_n$) of between about 700 and about 2,500.

20. A coating composition in accordance with claim 19 wherein (a) said hydroxy functional copolymer is formed from about 10 to about 30 weight percent of hydroxyl bearing aliphatic alcohol esters of acrylic and methacrylic acids and a remainder of other monoethylenically unsaturated monomers, including up to 2 weight percent based on the total weight percent of monomers used to form said copolymer of acrylic or methacrylic acid, said remainder, other than said acrylic or methacrylic acids, being selected from the group consisting of acrylates, methacrylates, monovinyl hydrocarbons having between 8 and 12 carbon atoms and other modifying vinyl monomers; and (b) said butylates melamine crosslinking agent comprises the reaction product of butyl alcohol, melamine and formaldehyde.

21. A coating composition in accordance with claim 19 or claim 20 wherein said film forming component (I) comprises from about 50 to about 90 weight percent of said hydroxy functional copolymer having a number average molecular weight ($\overline{M}_n$) of from greater than about 5,000 and from about 10 to about 50 weight percent of at least one hydroxy functional copolymer having a number average molecular weight ($\overline{M}_n$) of between about 1,500 and about 5,000 a glass transition temperature ($T_g$) of between about $-25°C$ and about 70°C, said hydroxy functional copolymers being formed from about 15 to about 35 weight percent of hydroxy functional monoethylenically unsaturated monomers, and a remainder of other monoethylenically unsaturated monomers.

22. A coating composition in accordance with any one of claims 14 to 18 wherein said film forming component (I) comprises a polymeric component having a number average molecular weight ($\overline{M}_n$) of less than about 5,000, said polymeric component comprising at least about 50 percent by weight of hydroxy functional copolymer having a number average molecular weight ($\overline{M}_n$) of from about 1,500 to about 5,000 and a glass transition temperature ($T_g$) of between about $-25°C$ and about 70°C, said hydroxy functional

22

0 051 400

copolymer being formed from about 15 to about 35 weight percent of hydroxy functional monoethylenically unsaturated monomers, from about 2 to about 5 weight percent of alpha, beta olefinically unsaturated carboxylic acids and a remainder of other monoethylenically unsaturated monomers, and said crosslinking agent (II) comprises from about 20 to about 100 parts per 100 parts of said film forming component (I) of monomeric methylated melamine resin having a number average molecular weight $(\overline{M}_n)$ of from about 350 to about 1000.

23. A coating composition in accordance with claim 22 wherein said alpha, beta olefinically unsaturated carboxylic acids employed in the formation of said hydroxy functional copolymer are employed in amounts ranging from about 2 to about 4 weight percent.

24. A coating composition in accordance with claim 21 or claim 22 wherein said hydroxy functional copolymer has a number average molecular weight $(\overline{M}_n)$ in the range of from about 2,300 to about 3,600 and is formed from between about 20 and about 30 weight percent of said hydroxy functional monoethylenically unsaturated monomers.

25. A coating composition in accordance with any one of claims 22 to 24 wherein said crosslinking agent (II) includes up to about 30 weight percent based on the total of said crosslinking agent of a butylated melamine formaldehyde resin having a number average molecular weight $(\overline{M}_n)$ of between about 700 and about 2,500.

26. A coating composition in accordance with claim 22 wherein (a) said hydroxy functional copolymer is formed from about 20 to about 30 weight percent of hydroxyl bearing aliphatic alcohol esters of acrylic and methacrylic acids, between about 2 and about 4 weight percent of acrylic or methacrylic acid and a remainder of other monoethylenically unsaturated monomers selected from the group consisting of acrylates, methacrylates, monovinyl hydrocarbons having between 8 and 12 carbon atoms, and other modifying vinyl monomers; and (b) said crosslinking agent comprises monomeric methylated melamine resin having a number average molecular weight $(\overline{M}_n)$ of between about 350 and about 1,000 and up to 30 weight percent based on the weight of said crosslinking agent of butylated melamine formaldehyde crosslinking agent having a number average molecular weight $(\overline{M}_n)$ of between about 700 and about 2,500.

**Patentansprüche**

1. Dispersionen, bestehend aus einer organischen Flüssigkeit, dispergierten Teilchen eines Additionspolymeren die in dieser organischen Flüssigkeit unlöslich sind, und einem polymeren Dispersionsstabilisator, dadurch gekennzeichnet, dass dieser Stabilisator aus einem Copolymeren besteht, welches das Reaktionsprodukt äthylenisch ungesättigter Monomerer (A) mit einem copolymeren Reaktionspartner (B) darstellt, wobei diese äthylenisch ungesättigten Monomeren (A) funktionelle Gruppen tragen, die zu einer Kondensationsreaktion mit komplementären funktionellen Gruppen in diesem copolymeren Reaktionspartner (B) befähigt sind, der aus einem statischen Copolymeren aus

(i) 20 bis 45 Gewichtsprozent äthylenisch ungesättigter Monomerer, deren Homopolymere in besagter organischer Flüssigkeit im wesentlichen unlöslich sind,

(ii) 40 bis 75 Gewichtsprozent äthylenisch ungesättigter Monomerer, deren Homopolymere in besagter organischer Flüssigkeit im wesentlich löslich sind und

(iii) 2 bis 15 Gewichtsprozent äthylenisch ungesättigter Monomerer, die jene komplementären, zu einer Kondensationsreaktion mit besagten äthylenisch ungesättigten Monomeren (A) befähigten funktionellen Gruppen tragen, besteht, wobei diese äthylenisch ungesättigten Monomeren (A) mit jenem copolymeren Reaktionspartner (B) in genügender Menge umgesetzt werden, um mindestens 10 Prozent jener komplementären funktionellen Gruppen des copolymeren Reaktionspartners (B) zur Reaktion zu bringen.

2. Dispersionen nach Anspruch 1, worin eines dieser äthylenisch ungesättigten Monomeren (i) bzw. (ii) aus einem Ester eines $C_4$—$C_{18}$-aliphatischen Alkohols mit Acryl-, Methacryl- oder Aethacrylsäure und das andere dieser äthylenisch ungesättigten Monomeren (i) bzw. (ii) aus einem unter (a) Estern von $C_1$—$C_3$-aliphatischen Alkoholen mit Acryl-, Methacryl- oder Aethacrylsäure, (b) Acryl- und Methacrylsäure und (c) Aethylen- und Propylenglykolmonoestern der Acryl-, Methacryl- oder Aethacrylsäure ausgewählten Acrylmonomeren besteht.

3. Dispersionen nach Anspruch 2, worin als solches äthylenisch ungesättigtes Monomer (i) Methylmethacrylat und als solches äthylenisch ungesättigtes Monomer (ii) 2-Aethylhexylacrylat vorliegen.

4. Dispersionen nach Anspruch 3, worin als das eine solcher äthylenisch ungesättigter Monomerer (A) bzw. (iii) Glycidylacrylat oder Glycidylmethacrylat und als das andere solcher äthylenisch ungesättigter Monomerer (A) bzw. (iii) Acryl- oder Methacrylsäure vorliegen.

5. Dispersionen nach einem der Ansprüche 1 bis 4, worin diese zur Herstellung des besagten copolymeren Reaktionspartners (B) und der besagten äthylenisch ungesättigten Monomeren (A), die mit jenem copolymeren Reaktionspartner (B) zur Bildung des polymeren Dispersionsstabilisators umgesetzt werden, verwendeten äthylenisch ungesättigten Monomeren (i), (ii) und (iii) Acrylmonomere umfassen.

6. Dispersionen nach einem der Ansprüche 1 bis 5, worin jene dispergierten Teilchen aus Mikrogelteilchen bestehen, die durch Additionspolymerisation von:

(a) je etwa 1 bis etwa 10 Molprozent der ersten und zweiten äthylenisch ungesättigten Monomeren, die zu einer Vernetzungsreaktion mit dem anderen befähigte funktionelle Gruppen tragen, und

(b) etwa 98 bis etwa 80 Molprozent mindestens eines anderen äthylenisch ungesättigten Monomeren

23

**0 051 400**

in Gegenwart jener organischen Flüssigkeit, die ein Lösungsmittel für die polymerisierbaren Monomeren, aber ein Nicht-Lösungsmittel für das entstehende Additionspolymer darstellt, gebildet werden.

7. Dispersionen nach Anspruch 6, worin die funktionellen Gruppen der besagten ersten bzw. zweiten äthylenisch ungesättigten Monomeren (a) Säure bzw. Epoxid, Epoxid bzw. Amin, Säureanhydrid bzw. Hydroxyl, Säureanhydrid bzw. Amin, Säureanhydrid bzw. Merkaptan, Isocyanat bzw. Hydroxyl, Hemiformal bzw. Amid, Carbonat bzw. Amin, Cycloimid bzw. Amin, Cycloimid bzw. Hydroxyl oder Imin bzw. Akoxysilan sind.

8. Dispersionen nach Anspruch 7, worin dieses Additionspolymer aus etwa 1 bis etwa 10 Molprozent alpha,beta-äthylenisch ungesättigter Monocarbonsäure, etwa 98 bis etwa 80 Molprozent mindestens eines anderen copolymerisierbaren, monoäthylenisch ungesättigten Monomeren und etwa 1 bis etwa 10 Molprozent äthylenisch ungesättigter, vernetzender Monoepoxidmonomeren gebildet ist.

9. Dispersionen nach Anspruch 8, worin das additionspolymer aus Methylmethacrylat und Glycidylmethacrylat gebildet ist.

10. Dispersionen nach einem der Ansprüche 7 bis 9, worin die organische Flüssigkeit und die äthylenisch ungesättigten Monomeren (i) und (ii) des besagten Copolymeren (B) so ausgewählt sind, dass die Homopolymeren dieser Monomeren (i) und (ii) des besagten Copolymeren (B) wegen der relativen Polaritäten dieser Homopolymeren und jener organische Flüssigkeit in dieser entweder im wesentlichen löslicher oder im wesentlichen unlöslich sein würden.

11. Dispersionen nach einem der Ansprüche 5 bis 10, die als weiteren Stabilisator butyliertes Melamin/Formaldehydharz mit einem zahlenmittleren Molekulargewicht $(\overline{M}_n)$ im Bereich von etwa 700 bis etwa 2500 enthalten, wobei dieser weitere Stabilisator in jener vernetzten Dispersion in einer Menge im Bereich von etwa 15 bis 75 Teilen Harzfeststoffen auf 100 Teile Gesamtharzfeststoffe in dieser vernetzten Dispersion eingesetzt wird.

12. Dispersionen nach einem der Ansprüche 5 bis 11, worin die organische Flüssigkeit aus einem aliphatischen kohlenwasserstoff besteht.

13. Beschichtungszusammensetzungen bestehend aus (I) einer hydroxyl-funktionellen filmbildenden komponente, (II) einem zur Reaktion mit den Hydroxylgruppen der filmbildenden Komponente befähigte funktionelle Gruppen tragenden Vernetzungsmittel und (III) einem aus einer Dispersion nach einem der Ansprüche 5 bis 12 bestehenden Verlaufmittel.

14. Beschichtungszusammensetzungen nach Anspruch 13, worin die filmbildende Komponente (I) aus einem hydroxylfunktionellen Copolymeren mit einem zahlenmittleren Molekulargewicht $(\overline{M}_n)$ ab etwa 150 bis etwa 20 000 und einer Glasübergangstemperatur $(T_g)$ im Bereich von etwa $-25°C$ bis etwa 70°C besteht, wobei dieses Copolymer aus etwa 5 bis etwa 50 Gewichtsprozent hydroxyl-funktionellen monoäthylenisch ungesättigten Monomeren und etwa 95 bis 50 Gewichtsprozent weiterer monoäthylenisch ungesättigter Monomerer besteht und das Vernetzungsmittel (II) aus einer Amino- oder Isocyanatverbindung besteht.

15. Beschichtungszusammensetzungen nach Anspruch 13 oder 14, worin das Verlaufmittel (III) in einer Menge von etwa 0,5 bis etwa 30 Teilen Harzfestoffen in diesem Verlaufmittel auf 100 Teile Gesamtharzfeststoffe in diesen Zusammensetzungen vorliegt.

16. Beschichtungszusammensetzungen nach Anspruch 14 oder 15, worin diese hydroxyl-funktionellen, monoäthylenisch ungesättigten Monomeren, aus denen jenes hydroxylfunktionelle Copolymer der filmbildenden Komponente (I) hergestellt wird, unter hydroxylhaltigen aliphatischen Alkoholestern monoäthylenisch ungesättigter Carbonsäuren ausgewählt sind.

17. Beschichtungszusammensetzungen nach einem der Ansprüche 14 bis 16, worin jene anderen monoäthylenisch ungesättigten Monomeren, aus denen das Hydroxyl-funktionelle Copolymer der filmbildenden Komponente (I) hergestellt wird, unter Acrylaten, Methacrylaten, Monovinylkohlenwasserstoffen mit 8 bis 12 Kohlenstoffatomen und anderen Vinylmonomeren ausgewählt sind.

18. Beschichtungszusammensetzungen nach Anspruch 17, worin jene anderen monoäthylenisch ungesättigten Monomeren, aus denen das hydroxyl-funktionelle Copolymer der filmbildenden Komponente (I) hergestellt wird, ferner alpha,beta-monoäthylenisch ungesättigte Monomere enthalten.

19. Beschichtungszusammensetzungen nach einem der Ansprüche 14 bis 18, worin jenes hydroxylfunktionelle Copolymer der besagten filmbildenden Komponente (I) ein zahlenmittleres Molekulargewicht $(\overline{M}_n)$ von mehr als 5000 besitzt und jenes Vernetzungsmittel (II) etwa 20 bis etwa 100 Teile butylierten Melamin/Formaldehyds mit einem mittleren Molekulargewicht $(\overline{M}_n)$ von etwa 700 bis 2500 auf 100 Teile der besagten filmbildenden Komponente enthält.

20. Beschichtungszusammensetzungen nach Anspruch 19, worin (a) dieses hydroxyl-funktionelle Copolymer aus etwa 10 bis etwa 30 Gewichtsprozent hydroxylhaltigen aliphatischen Alkoholestern der Acryl- und Methacrylsäure und für den Rest aus anderen monoäthylenisch ungesättigten Monomeren, einschliesslich bis zu 2 Gewichtsprozent Acryl- oder Methacrylsäure, bezogen auf die Gesamtgewichtsprozente der zur Bildung dieses Copolymeren verwendeten Monomeren, besteht, wobei dieser Rest ausser dieser Acryl- oder Methacrylsäure aus der Acrylate, Methacrylate, Monovinylkohlenwasserstoffe mit 8 bis 12 Kohlenstoffatomen und weitere modifizierende Vinylmonomere umfassenden Gruppe ausgewählt ist, und (b) jenes butylierte Melamin-Vernetzungsmittel aus dem Reaktionsprodukt von Butylalkohol, Melamin und Formaldehyd besteht.

21. Beschichtungszusammensetzungen nach Anspruch 19 oder 20, worin besagte filmbildende Komponente (I) aus etwa 50 bis etwa 90 Gewichtsprozent jenes hydroxyl-funktionellen Copolymeren mit

24

einem zahlenmittleren Molekulargewicht ($\overline{M}_n$) ab über etwa 5000 und etwa 10 bis etwa 50 Gewichtsprozent mindestens eines hydroxyl-funktionellen Copolymeren mit einem zahlenmittleren Molekulargewicht ($\overline{M}_n$) von etwa 1500 bis etwa 5000 und einer Glasübergangstemperatur ($T_g$) von etwa −25°C bis etwa 70°C besteht, wobei diese hydroxyl-funktionellen Copolymeren aus etwa 15 bis etwa 35 Gewichtsprozent hydroxyl-funktionellen monoäthylenisch ungesättigten Monomeren und einem Rest aus anderen monoäthylenisch ungesättigten Monomeren gebildet sind.

22. Beschichtungszusammensetzungen nach einem der Ansprüche 14 bis 18, worin diese filmbildende Komponente (I) aus einer polymeren komponente mit einem zahlenmittleren Molekulargewicht ($\overline{M}_n$) unter etwa 5000 besteht, wobei diese polymere Komponente aus mindestens etwa 50 Gewichtsprozent hydroxyl-funktionellem Copolymer mit einem zahlenmittleren Molekulargewicht ($\overline{M}_n$) von etwa 1500 bis etwa 5000 und einer Glasübergangstemperatur ($T_g$) von etwa −25°C bis etwa 70°C besteht, und wobei dieses hydroxyl-funktionelle Copolymer aus etwa 15 bis etwa 35 Gewichtsprozent hydroxyl-funktionellen, monoäthylenisch ungesättigten Monomeren, etwa 2 bis etwa 5 Gewichtsprozent alpha,beta-olefinisch ungesättigten Carbonsäuren und für den Rest aus anderen monoäthylenisch ungesättigten Monomeren gebildet ist, und jenes Vernetzungsmittel (II) aus etwa 20 bis etwa 100 Teilen monomerem methyliertem Melaminharz mit einem zahlenmittleren Molekulargewicht ($\overline{M}_n$) von etwa 350 bis etwa 1000 auf 100 Teile der besagten filmbildenden Komponente (I) besteht.

23. Beschichtungszusammensetzungen nach Anspruch 22, worin diese bei der Bildung jenes hydroxyl-funktionellen Copolymers verwendeten alpha,beta-olefinisch ungesättigten Carbonsäuren in Mengen im Bereich von etwa 2 bis etwa 4 Gewichtsprozent eingesetzt werden.

24. Beschichtungszusammensetzungen nach Anspruch 21 oder 22, worin dieses hydroxyl-funktionelle Copolymer ein zahlenmittleres Molekulargewicht ($\overline{M}_n$) im Bereich von etwa 2300 bis etwa 3600 besitzt und aus etwa 20 bis etwa 30 Gewichtsprozent dieser hydroxyl-funktionellen monoäthylenisch ungesättigten Monomeren gebildet ist.

25. Beschichtungszusammensetzungen nach einem der Ansprüche 22 bis 24, worin dieses Vernetzungsmittel (II) bis etwa 30 Gewichtsprozent, bezogen auf dieses Vernetzungsmittel insgesamt, eines butylieren Melamin/Formaldehydharzes mit einem zahlenmittleren Molekulargewicht ($\overline{M}_n$) von etwa 700 bis etwa 2500 mitenhält.

26. Beschichtungszusammensetzungen nach Anspruch 22, worin (a) dieses hydroxyl-funktionelle Copolymer aus etwa 20 bis etwa 30 Gewichtsprozent hydroxylhaltigen aliphatischen Alkoholestern der Acryl- und Methacrylsäure, etwa 2 bis etwa 4 Gewichtsprozent Acryl- oder Methacrylsäure und für den Rest aus anderen monoäthylenisch ungesättigten, aus der Acrylate, Methacrylate, Monovinylkohlenwasserstoffe mit 8 bis 12 Kohlenstoffatomen und andere modifizierende Vinylmonomere enthaltenden Gruppe ausgewählten Monomeren gebildet ist und (b) jenes Vernetzungsmittel aus monomerem methyliertem Melaminharz mit einem zahlenmittleren Molekulargewicht ($\overline{M}_n$) von etwa 350 bis etwa 1000 und bis zu 30 Gewichtsprozent, bezogen auf das Gewicht dieses Vernetzungsmittels, butyliertem Melamin/Formaldehydvernetzungsmittel mit einem zahlenmittleren Molekulargewicht ($\overline{M}_n$) von etwa 700 bis etwa 2500 besteht.

**Revendications**

1. Une dispersion comprenant un liquide organique, des particules dispersées d'un polymère d'addition, qui sont insolubles dans ledit liquide organique, et un stabilisateur de dispersion polymère, caractérisée en ce que ledit stabilisateur comprend un copolymère qui est le produit de réaction de monomères à insaturation éthylénique (A) et d'un réactant copolymère (B), lesdits monomères à insaturation éthylénique (A) étant porteurs de fonctionnalité capable de réaction de condensation avec la fonctionnalité complémentaire dudit réactant copolymère (B) qui comprend un copolymère aléatoire de

(i) de 20 à 45 pour cent en poids de monomères à insaturation éthylénique, dont les homopolymères sont essentiellement insolubles dans ledit liquide organique;

(ii) de 40 à 75 pour cent en poids de monomères à insaturation éthylénique, dont les homopolymères sont essentiellement solubles dans ledit liquide organique; et

(iii) de 2 à 15 pour cent en poids de monomères à insaturation éthylénique, porteurs de ladite fonctionnalité complémentaire capable de réaction de condensation avec lesdits monomères à insaturation éthylénique (A), lesdits monomères à insaturation éthylénique (A) étant laissés à réagir avec ledit réactant copolymère (B) en quantité suffisante pour réagir avec au moins 10 pour cent de ladite fonctionnalité complémentaire dudit réactant copolymère (B).

2. Une dispersion selon la revendication 1 dans laquelle l'un desdits monomères à insaturation éthylénique (i) ou (ii) comprend un ester d'un alcool aliphatique en $C_4$—$C_{18}$ et d'acide acrylique, méthacrylique ou éthacrylique, et l'autre desdits monomères à insaturation éthylénique (i) ou (ii) comprend un monomère acrylique choisi à partir (a) d'esters d'alcools aliphatiques en $C_1$—$C_3$ et d'acides acrylique, méthacrylique ou éthacrylique, (b) d'acides acrylique et méthacrylique, et (c) des monoesters d'éthylène et de propylène glycol et d'acides acrylique, méthacrylique ou éthacrylique.

3. Une dispersion selon la revendication 2 dans laquelle ledit monomère à insaturation éthylénique (i) est le méthacrylate de méthyle, et ledit monomère à insaturation éthylénique (ii) est l'acrylate d'éthyle-2-hexyle.

4. Une dispersion selon la revendication 3 dans laquelle l'un desdits monomères à insaturation éthylénique (A) ou (iii) est l'acrylate de glycidyle ou le méthacrylate de glycidyle et l'autre desdits monomères à insaturation éthylénique (A) ou (iii) est l'acide acrylique ou méthacrylique.

5. Une dispersion selon l'une quelconque des revendications 1 à 4 dans laquelle lesdits monomères à insaturation éthylénique (i), (ii), et (iii) employés dans la préparation dudit réactant copolymère (B) et lesdits monomères à insaturation éthylénique (A) que l'on fait réagir avec ledit réactant copolymère (B) pour former ledit stabilisateur de dispersion polymère incluent des monomères acryliques.

6. Une dispersion selon l'une quelconque des revendications 1 à 5 dans laquelle lesdites particules dispersées comprennent des particules de microgel, formées par polymérisation d'addition:—

(a) d'environ 1 à environ 10 moles pour cent de chacun des premier et second monomères à insaturation éthylénique, porteurs de fonctionnalité capable de réaction de réticulation avec l'autre et

(b) d'environ 98 à environ 80 moles pour cent d'au moins un autre monomère à insaturation éthylénique en présence dudit liquide organique, qui est un solvant des monomères polymérisables mais qui est un non-solvant du polymère d'addition résultant.

7. Une dispersion selon la revendication 6 dans laquelle les fonctionnalités desdits premier et second monomères à insaturation éthylénique (a) sont respectivement: acide et époxyde; époxyde et amine; anhydride d'acide et hydroxyle; anhydride d'acide et amine; anhydride d'acide et mercaptan; isocyanate et hydroxyle; hémiformal et amide; carbonate et amine; cycloimide et amine; cycloimide et hydroxyle; ou imine et alcoxysilane.

8. Une dispersion selon la revendication 7 dans laquelle ledit polymère d'addition est formé à partir d'environ 1 à environ 10 moles pour cent d'acide monocarboxylique à insaturation éthylénique-$\alpha,\beta$, à partir d'environ 98 à environ 80 moles pour cent d'au moins un autre monomère à insaturation monoéthylénique copolymérisable et à partir d'environ 1 à environ 10 moles pour cent de monomères de monoépoxyde réticulant à insaturation éthylénique.

9. Une dispersion selon la revendication 8 dans laquelle le polymère d'addition est formé à partir de méthacrylate de méthyle et de méthacrylate de glycidyle.

10. Une dispersion selon l'une quelconque des revendications 7 à 9 dans laquelle le liquide organique et les monomères à insaturation éthylénique (i) et (ii) dudit copolymère (B) sont choisis de telle façon que les homopolymères desdits monomères (i) et (ii) dudit copolymère (B) soient soit essentiellement solubles, soit essentiellement insolubles dans ledit liquide organique par suite des polarités relatives desdits homopolymères et dudit liquide organique.

11. Une dispersion selon l'une quelconque des revendications 5 à 10 qui comprend, un stabilisateur supplémentaire, une résine mélamine-formaldéhyde butylée ayant un poids moléculaire de moyenne numérique ($\overline{M}_n$) dans l'intervalle d'environ 700 à environ 2.500, ledit stabilisateur supplémentaire étant inclu dans ladite dispersion réticulée dans une proportion allant d'environ 15 à environ 75 parties de solides résineux pour 100 parties de solides résineux totaux dans ladite dispersion réticulée.

12. Une dispersion selon l'une quelconque des revendications 5 à 11 dans laquelle le liquide organique comprend und hydrocarbure aliphatique.

13. Une composition de peinture comprenant (I) un composant filmogène à fonctions hydroxyles, (II) un agent de réticulation porteur de fonctionnalité capable de réagir avec les groupes hydroxyles du composant filmogène, et (III) un additif régulateur d'écoulement comprenant une dispersion selon l'une quelconque des revendications 5 à 12.

14. Une composition de peinture selon la revendication 13 dans laquelle le composant filmogène (I) comprend un copolymère à fonctions hydroxyles ayant un poids moléculaire de moyenne numérique ($\overline{M}_n$) supérieure à environ 150 et allant jusqu'à environ 20.000 et une température de transition vitreuse ($T_g$) dans l'intervalle d'environ −25°C à environ 70°C, ledit copolymère étant formé à partir d'environ 5 à environ 50 pour cent en poids de monomères à insaturation monoéthylénique à fonctions hdyroxyles et d'environ 95 à environ 50 pour cent en poids d'autres monomères à insaturation monoéthylénique; et l'agent de réticulation (II) comprend un composé aminé ou isocyanate.

15. Une composition de peinture selon la revendication 13 ou la revendication 14 dans laquelle l'additif régulateur d'écoulement (III) est présent dans une proportion allant d'environ 0,5 à environ 30 parties de solides résineux dans ledit additif régulateur d'écoulement pour 100 parties de solides résineux totaux dans ladite composition.

16. Une composition de peinture selon la revendication 14 ou la revendication 15 dans laquelle lesdits monomères à insaturation monoéthylénique à fonctions hydroxyles à partir desquels ledit copolymère à fonctions hydroxyles du composant filmogène (I) est préparé, sont choisis à partir d'esters d'alcools aliphatiques porteurs d'hydroxyle et d'acides carboxyliques à insaturation monoéthylénique.

17. Une composition de peinture selon l'une quelconque des revendications 14 à 16 dans laquelle lesdits autres monomères à insaturation monoéthylénique à partir desquels le copolymère à fonctions hydroxyles du composant filmogène (I) est préparé, sont choisis à partir d'acrylates, de méthacrylates, d'hydrocarbures monovinyliques ayant entre 8 et 12 atomes de carbone et d'autres monomères vinyliques.

18. Une composition de peinture selon la revendication 17 dans laquelle lesdits autres monomères à insaturation monoéthylénique à partir desquels le copolymère à fonctions hydroxyles du composant filmogène (I) est préparé, incluent aussi des monomères à insaturation monoéthylénique $\alpha,\beta$.

19. Une composition de peinture selon l'une quelconque des revendications 14 à 18 dans laquelle ledit copolymère à fonctions hydroxyles dudit composant filmogène (I) a un poids moléculaire de moyenne

26

numérique ($\overline{M}_n$) supérieure à environ 5.000 et ledit agent de réticulation (II) comprend d'environ 20 à environ 100 parties pour 100 parties dudit composant filmogène de mélamine-formaldéhyde butylée ayant un poids moléculaire moyen ($\overline{M}_n$) d'environ 700 à environ 2.500.

20. Une composition de peinture selon la revendication 19 dans laquelle (a) ledit copolymère à fonctions hydroxyles est formé à partir d'environ 10 à environ 30 pour cent en poids d'esters d'alcools aliphatiques porteurs d'hydroxyles et d'acides acrylique et méthacrylique et une partie restante d'autres monomères à insaturation monoéthylénique, qui incluent jusqu'à 2 pour cent en poids sur la base du pourcentage total en poids des monomères employés pour former ledit copolymère d'acide acrylique ou méthacrylique, ladite partie restante, autre que lesdits acides acrylique ou méthacrylique, étant choisie à partir du groupe constitué des acrylates, méthacrylates, hydrocarbures monovinyliques ayant de 8 à 12 atomes de carbone et autres monomères vinyliques modifiants; et (b) ledit agent de réticulation à la mélamine butylée comprend le produit de réaction de l'alcool butylique, de la mélamine et du formaldéhyde.

21. Une composition de peinture selon la revendication 19 ou la revendication 20 dans laquelle ledit composant filmogène (I) comprend d'environ 50 à environ 90 pour cent en poids dudit copolymère à fonctions hydroxyles ayant un poids moléculaire de moyenne numérique ($\overline{M}_n$) supérieure à environ 5.000 et d'environ 10 à environ 50 pour cent en poids d'au moins un copolymère à fonctions hydroxyles ayant un poids moléculaire de moyenne numérique ($\overline{M}_n$) d'environ 1.500 à environ 5.000, une température de transition vitreuse ($T_g$) d'environ −25°C à environ 70°C, lesdits copolymères à fonctions hydroxyles étant formés à partir d'environ 15 à environ 35 pour cent en poids de monomères à insaturation monoéthylénique à fonctions hydroxyles, et une partie restante d'autres monomères à insaturation monoéthylénique.

22. Une composition de peinture selon l'une quelconque des revendications 14 à 18 dans laquelle ledit composant filmogène (I) comprend un composant polymère ayant un poids moléculaire de moyenne numérique ($\overline{M}_n$) inférieure à environ 5.000, ledit composant polymère comprenant au moins 50 pour cent en poids de copolymère à fonctions hydroxyles ayant un poids moléculaire de moyenne numérique ($\overline{M}_n$) d'environ 1.500 à environ 5.000, et une température de transition vitreuse ($T_g$) d'environ −25°C à environ 70°C, ledit copolymère à fonctions hydroxyles étant formé à partir d'environ 15 à environ 35 pour cent en poids de monomères à insaturation monoéthylénique, à fonctions hydroxyles, à partir d'environ 2 à environ 5 pour cent en poids d'acides carboxyliques à insaturation oléfinique-α,β, et d'une partie restante d'autres monomères à insaturation monoéthylénique, et ledit agent de réticulation (II) comprend d'environ 20 à environ 100 parties pour 100 parties dudit composant filmogène (I) de résine mélamine méthylée monomère ayant un poids moléculaire de moyenne numérique ($\overline{M}_n$) d'environ 350 à environ 1.000.

23. Une composition de peinture selon la revendication 22 dans laquelle lesdits acides carboxyliques à insaturation oléfinique-α,β, employés dans la formation dudit copolymère à fonctions hydroxyles sont employés dans des quantités allant d'environ 2 à environ 4 pour cent en poids.

24. Une composition de peinture selon la revendication 21 ou la revendication 22 dans laquelle ledit copolymère à fonctions hydroxyles a un poids moléculaire de moyenne numérique ($\overline{M}_n$) dans l'intervalle d'environ 2.300 à environ 3.600, et est formé à partir d'environ 20 à environ 30 pour cent en poids desdits monomères à insaturation monoéthylénique, à fonctions hydroxyles.

25. Une composition de peinture selon l'une quelconque des revendications 22 à 24 dans laquelle ledit agent de réticulation (II) inclut jusqu'à environ 30 pour cent en poids, sur la base du total dudit agent de réticulation d'une résine mélamine-formaldéhyde butylée ayant un poids moléculaire de moyenne numérique ($\overline{M}_n$) d'environ 700 à environ 2.500.

26. Une composition de peinture selon la revendication 22 dans laquelle (a) ledit copolymère à fonctions hydroxyles est formé à partir d'environ 20 à environ 30 pour cent en poids d'esters d'alcools aliphatiques porteurs d'hydroxyles et d'acides acrylique et méthacrylique, d'environ 2 à environ 4 pour cent en poids d'acide acrylique ou méthacrylique et d'une partie restante d'autres monomères à insaturation monoéthylénique choisis parmi le groupe constitué des acrylates, des méthacrylates, des hydrocarbures monovinyliques ayant de 8 à 12 atomes de carbone, et d'autres monomères vinyliques modifiants; et (b) ledit agent de réticulation comprend une résine mélamine méthylée monomère ayant un poids moléculaire de moyenne numérique ($\overline{M}_n$) d'environ 350 à environ 1.000 et contenant jusqu'à 30 pour cent en poids, sur la base du poids dudit agent de réticulation de mélamineformaldéhyde butylée, ayant un poids moléculaire de moyenne numérique ($\overline{M}_n$) d'environ 700 à environ 2.500.